# EUROPEAN PATENT APPLICATION

(11) **EP 4 718 696 A1**
(43) Date of publication of application: **01.04.2026**
(21) Application number: 25204127.2
(22) Date of filing: 23.09.2025
(51) Int. Cl.: H02M 1/00, H02M 7/219, H02M 1/08

(54) **FULL-WAVE ACTIVE RECTIFIER CONTROL**

(30) Priority: 26.09.2024 US 202418897975
(71) Applicant: Analog Devices International Unlimited Company, Co. Limerick (IE)
(72) Inventor: CONSOLI, Elio, Limerick (IE); RICCA, Carmelo, Limerick (IE); PATTI, Giuseppe, Limerick (IE); SCARPATA, Andrea, Limerick (IE); GARUFI, Gabriel, Limerick (IE)
(74) Representative: Horler, Philip John

(57) **Abstract**

A full-wave active rectifier system, comprising: a full-wave active rectifier for generating a DC voltage output signal based on an AC voltage input signal. The full-wave active rectifier comprising first and second transistors which are controllable by a controller, and, third and fourth transistors which are controlled by the AC voltage input signal. The full-wave active rectifier system comprising: the controller coupled to the first transistor. The full-wave active rectifier system is configured to: when the first transistor is in an off-state, monitor a first voltage at a node shared by the AC voltage input signal and a first terminal of the first transistor; and sense a voltage transient in the first voltage caused by switching the first transistor between an on-state and the off-state. The controller is configured to: control, in response to sensing the voltage transient, a phase-angle at which the first transistor switches between the on-state and the off-state.

## Description

### FIELD

This application relates to methods and circuit arrangements for full-wave active rectifier control. Specifically, for self-adaptive active control of a full-wave rectifier circuit.

### BACKGROUND

Full-wave active rectifiers (also called AC/DC power converters) are generally known. Full-wave active rectifiers are preferable over full-wave passive rectifiers as full-wave active rectifiers can provide improved power efficiencies during the conversion from AC power to DC power.

### SUMMARY OF THE DISCLOSURE

According to a first aspect there is provided a full-wave active rectifier system, comprising:
a full-wave active rectifier for generating a DC voltage output signal based on an AC voltage input signal, the full-wave active rectifier comprising: a controller; first and
second transistors which are controllable by the controller; and, third and fourth transistors which are controlled by the AC voltage input signal; wherein the full-wave active rectifier system is configured to:
   when the first transistor is in an off-state, monitor a first voltage at an AC input node shared by the AC voltage input signal and a first terminal of the first transistor; and
   sense a voltage transient in the first voltage caused by switching the first transistor between an on-state and the off-state,
wherein the controller is configured to:
   control, in response to sensing the voltage transient, a phase-angle at which the first transistor switches between the on-state and the off-state.

Optionally, the controller is coupled to the first transistor. Optionally, the controller is coupled to the second transistor.

Optionally, the phase-angle is of a period of the AC voltage input signal.

Optionally, the operating frequency of the AC voltage input signal is between 5 and 20 MHz.

Optionally, each transistor is a FET. Optionally each transistor is a MOSFET.

Optionally, each transistor comprising a control terminal, and first and second channel terminals (i.e., current carrying part). Optionally, the full-wave active rectifier comprises a first AC voltage input node coupled to a first channel terminal (drain) of the fourth transistor, a first channel terminal (drain) of the first transistor, and a control terminal of the third transistor. Optionally, the full-wave active rectifier comprises a second AC voltage input node coupled to a first channel terminal (drain) of the third transistor, a first channel terminal (drain) of the second transistor, and a control terminal of the fourth transistor. Optionally, the full-wave active rectifier comprises a voltage output node coupled to a second channel terminal (source) of the third transistor and a second channel terminal (source) of the fourth transistor. Optionally, the full-wave active rectifier comprises a ground node coupled to a second channel terminal (source) of the first transistor and a second channel terminal (source) of the second transistor.

Optionally, the first terminal of the first transistor is the drain of the first transistor.

Optionally, a first terminal of the second transistor is the drain of the second transistor

Optionally, the phase-angle is an activation phase-angle. Optionally, the activation phase-angle is controlled to anticipate the switching of the first transistor from the off-state to the on-state in response to sensing the voltage transient.

Optionally, the phase-angle is an activation phase-angle. Optionally, the activation phase-angle is controlled to delay the switching of the first transistor from the off-state to the on-state in response to not sensing the voltage transient within a period of the AC voltage input signal.

Optionally, the phase-angle is a deactivation phase-angle, the deactivation phase-angle is controlled to delay the switching of the first transistor from the on-state to the off-state in response to sensing the voltage transient.

Optionally, the phase-angle is a deactivation phase-angle, the deactivation phase-angle is controlled to anticipate the switching of the first transistor from the on-state to the off-state in response to not sensing the voltage transient within a period of the AC voltage input signal.

Optionally, the controller is further configured to generate a varying voltage signal based on the frequency of the AC voltage input signal, wherein the phase-angle is determined based on the varying voltage signal reaching a first threshold.

Optionally, the controller is further configured to switch the first transistor from the off state to the on-state based on the activation phase-angle. Optionally, the controller is further configured to switch the first transistor from the on-state to the off-state based on the deactivation phase-angle.

Optionally, the phase-angle is an activation phase-angle. Optionally, the controller is further configured to switch the first transistor from the off state to the on-state based on the activation phase-angle. Optionally, the controller is further configured to switch the first transistor from the on-state to the off-state based on the deactivation phase-angle. Optionally, the deactivation phase-angle is determined based on the varying voltage signal reaching a second threshold.

Optionally, the second threshold is greater than the first threshold.

Optionally, the varying voltage signal is generated upon determining that one of the third or fourth transistors is switched between an off-state and an on-state. Optionally, the varying voltage signal is generated upon determining that the gate threshold voltage of one of the third and fourth transistors is reached and/or exceeded.

Optionally, the first and/or second varying voltage signal is a 'one-to-one function' and tracks the frequency of the AC voltage input signal.

Optionally. the controller is configured to: Reset the varying voltage signal when the third transistor or fourth transistor is switched between an off-state and an on-state.

Optionally, the controller is configured to adjust the first threshold in response to sensing the voltage transient and/or adjust the second threshold in response to sensing the voltage transient.

Optionally, the first threshold is reduced in response to sensing the voltage transient.

Optionally, the second threshold is increased in response to sensing the voltage transient.

Optionally, the first and second thresholds are adjusted by a fixed voltage level.

Optionally, the controller is further configured to set the first threshold equal to the second threshold upon start-up of the full-wave active rectifier.

Optionally, the controller is configured to operate a frequency tracking algorithm configured to: determine a peak value of the varying voltage signal, wherein the varying voltage signal has a corresponding rate of change; and increase the rate of change of the varying voltage signal if the peak fails to exceed a lower threshold; or decrease the rate of change of the subsequent varying voltage signal if the peak exceeds an upper threshold. The varying voltage signal may occur once or twice each cycle (twice may compensate for asymmetrical input waveform).

Optionally, the varying voltage signal occurs once or twice each cycle. Optionally, there are two varying voltage signals to compensate for asymmetrical input waveform.

Optionally, the varying voltage signal is reset after the varying voltage signal reaches its peak value.

Optionally, the frequency tracking algorithm is further configured to: maintain the rate of change of the subsequent varying voltage signal if the peak exceeds the lower threshold and fails to exceed the upper threshold.

Optionally, the varying voltage signal is a ramp signal.

Optionally, the voltage transient is sensed by comparing the first voltage to a control voltage threshold. Optionally, the control voltage threshold is between ground level (GND) and -Vt, where Vt is the cut-in voltage of the body diode of the first transistor, and optionally/preferably between GND and -Vt/2.

Optionally, the control voltage threshold is determined by the IR voltage drop over a resistor.

Optionally, the full-wave active rectifier system comprises a transient detection comparator comprising an input coupled to the AC input node and configured to compare the first voltage to the control voltage threshold.

Optionally, the transient detection comparator is configured to be: deactivated when the first transistor is in the on-state (e.g., when the first varying voltage signal reaches the first threshold); and, activated when the first transistor is in the off-state (e.g., when the first varying voltage signal reaches the second threshold).

Optionally, the first transient detection comparator is arranged to be: activated when the fourth transistor is deactivated; deactivated when the first transistor is activated (e.g., when the first varying voltage signal reaches the first threshold); activated when the first transistor is deactivated (e.g., when the first varying voltage signal reaches the second threshold); deactivated when the third transistor is deactivated.

Optionally, the transient detection comparator generates a flag signal indicating that the first voltage exceeds the control voltage threshold. Optionally, the controller is configured to control the phase-angle based on the flag signal and determine that the first transistor is switched between the on-state and the off-state.

Optionally, the transient detection comparator is a first transient detection comparator. Optionally, the AC input node is a first AC input node, and optionally the full-wave active rectifier arrangement comprises a second transient detection comparator comprising an input coupled to a second AC input node shared by the AC voltage input signal and a first terminal of the second transistor and the second transient detection comparator is configured to compare the control voltage threshold to the voltage at the second AC input node.

Optionally, the second transient detection comparator is configured to be: deactivated when the second transistor is an on-state (e.g., when the first varying voltage signal reaches the third threshold); and activated when the second transistor is an off-state (e.g., when the first varying voltage signal reaches the fourth threshold).

Optionally, the second transient detection comparator is arranged to be: activated when the third transistor is deactivated; deactivated when the second transistor is activated (e.g., when the first varying voltage signal reaches the third threshold); activated when the second transistor is deactivated (e.g., when the first varying voltage signal reaches the fourth threshold); deactivated when the fourth transistor is deactivated.

Optionally, the first transient detection comparator is arranged to be: deactivated when the first transistor is activated; activated when the first transistor is deactivated; deactivated when the second transistor is activated; activated when the second transistor is deactivated.

Optionally, the full-wave active rectifier system comprises: a Digital to Analog Converter, DAC, configured to generate the first threshold and the second threshold, wherein the first threshold is adjusted by a voltage level equivalent to 1 Least Significant Bit, LSB, of the DAC, wherein the second threshold is adjusted by a voltage level equivalent to 1 Least Significant Bit, LSB, of the DAC.

Optionally, the AC input node is a first AC input node, wherein the full-wave active rectifier system further configured to: when the second transistor is in an off-state, monitor a second voltage at a second AC input node shared by the AC voltage input signal and a first terminal of the second transistor; and optionally sense a second voltage transient in the second voltage caused by switching the first transistor between an on-state and the off-state. Optionally, the controller is further configured to: control, in response to sensing the second voltage transient, a second phase-angle at which the second transistor switches between the on-state and the off-state.

Optionally, the second phase-angle is a second activation phase-angle. Optionally, the second activation phase-angle is controlled to anticipate the switching of the second transistor from the off-state to the on-state in response to sensing the second voltage transient.

Optionally, the second phase-angle is a second deactivation phase-angle. Optionally, the second deactivation phase-angle is controlled to delay the switching of the second transistor from the on-state to the off-state in response to sensing the second voltage transient.

Optionally, the varying voltage signal is a first varying voltage signal. Optionally, the full-wave active rectifier system is further configured to generate a second varying voltage signal based on the frequency of the AC voltage input signal. Optionally, the second phase-angle is determined based on the second varying voltage signal reaching a third threshold.

Optionally, the second deactivation phase of the second transistor is determined based on the second varying voltage signal reaching a fourth threshold.

Optionally, the varying voltage signal is a first varying voltage signal, and the full-wave active rectifier system is further configured to: generate the first varying voltage signal upon determining that the fourth transistor is switched between an off-state and an on-state; and optionally, generate a second varying voltage signal upon determining that the third transistor is switched between an off-state and an on-state.

Optionally, the controller is configured to reset the varying voltage signal when the fourth transistor is switched between an off-state and an on-state. Optionally, the controller is configured to reset the second varying voltage signal when the third transistor is switched between an off-state and an on-state.

### BRIEF DESCRIPTION OF THE DRAWINGS

Figure 1 illustrates a schematic wiring diagram of an existing full-wave active rectifier.
Figure 2 illustrates a schematic block wiring diagram of a full-wave active rectifier in an example of the invention.
Figure 3 illustrates a graph of a partial cycle of the AC voltage input signal over a time period.
Figure 4 illustrates a graph of a cycle of the AC voltage input signal over a time period corresponding to a ramp signal.
Figure 5 illustrates a graph of multiple cycles of the AC voltage input signal over a time period corresponding to two ramp signals.
Figure 6 illustrates a schematic block wiring diagram of a full-wave active rectifier in an example of the invention with optional features.
Figure 7 illustrates a method of the controller to generate a control signal provided to the control terminal of a transistor based on voltage thresholds and a ramp signal over a time period.
Figure 8a illustrates a ramp signal increasing its rate of change each time it is reset until a desired rate of change is reached.
Figure 8b illustrates a ramp signal decreasing its rate of change each time it is reset until a desired rate of change is reached.
Figure 8c illustrates a graph with time showing when the frequency is locked, with respect to Figures 8a or 8b.
Figure 9 illustrates a process of a frequency tracking algorithm which may be applied to one or more ramp signals to reach a desired rate of change.
Figure 10 illustrates a schematic block wiring diagram of a full-wave active rectifier in an example of the invention with optional features.
Figure 11 illustrates a graph of a cycle of the AC voltage input signal corresponding to a ramp signal and a control signal applied to a control terminal of an active transistor.
Figure 12 illustrates five graphs showing how the output of first and second transient detection comparators corresponding to the AC voltage input signal is generated, with respect to time.
Figure 13 illustrates the partial line graph of the voltage at the node D1 at the input of a transient detection comparator and a corresponding graph showing the output of the transient detection comparator, with respect to time.
Figure 14 illustrates a process of an adjustment algorithm which may be applied by a controller to control, in response to sensing the output of a transient detection comparator, a phase-angle at which an active transistor switches between an on-state and an off-state.
Figure 15 illustrates multiple signal graphs corresponding to the switching of one active transistor with a common time scale of three cycles of the AC voltage input signal.
Figure 16 illustrates a graph of the DC voltage output signal generated from the AC voltage input signal, in accordance with the full-wave active rectifier system of an example of the invention.
Figure 17 illustrates a graph of the DC voltage output signal generated from the AC voltage input signal in accordance with a full-wave passive rectifier, specifically a Schottky diode rectifier.

### DETAILED DESCRIPTION

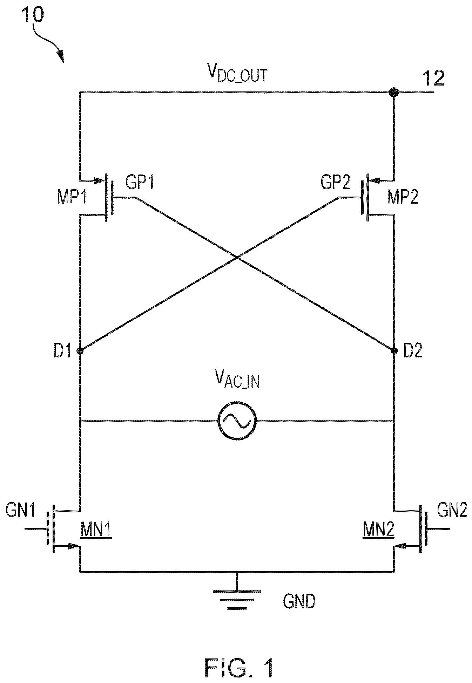

Figure 1 illustrates an existing full-wave active rectifier 10. The full-wave active rectifier 10 is suitable for generating a DC voltage output signal *VDC_OUT* based on an AC voltage input signal *V_{AC_IN}.* The full-wave active rectifier 10 comprises first and second transistors *MN1, MN2* (e.g., MOSFETs) which are controllable by a controller, and third and fourth transistors *MP2, MP1* which are controlled by the AC voltage input signal *V_{AC_IN}.* The AC voltage input signal *V_{AC_N}* is provided at a first node D1 and a second node D2.

The first and second transistors *MN1, MN2* may be known as *'*active transistors' because they are controllable by a controller, or 'low-side transistors' because they are directly coupled to DC ground. The third and fourth transistors *MP2, MP1* may be known as *'*passive transistors' because they are controlled by the AC voltage input signal *V_{AC_IN},* or 'high-side transistors' because they are directly coupled to the DC voltage output signal *V_{DC_OUT}.*

Each transistor *MN*1, *MN*2, *MP*2, *MP*1 comprises a respective control terminal *GN*1, *GN*2, *GP*2, *GP*1, and first and second channel terminals (i.e., current carrying part). Each transistor *MN1,MN2,MP2,MP1* may be a FET or more specifically a MOSFET. Where each transistor *MN*1, *MN*2, *MP*2, *MP*1 is a MOSFET, the respective control terminal *GN*1, *GN*2, *GP*1, *GP*2 is a gate terminal, the respective first channel terminal is a drain terminal, and the respective second channel terminal is a source terminal.

The AC voltage input signal *V_{AC_IN}* is provided to the full-wave active rectifier by a first node D1 and a second node D2. The first node D1 is electrically coupled to the first channel terminal (e.g., drain) of the fourth transistor *MP*1, the first channel terminal (e.g., drain) of the first transistor *MN1,* and the control terminal *GP2* of the third transistor *MP2.* The second node D2 is electrically coupled to the first channel terminal (e.g., drain) of the third transistor *MP2,* the first channel terminal (e.g., drain) of the second transistor *MN2,* and the control terminal *GP*1 of the fourth transistor *MP1.* The DC voltage output signal *VDC_OUT* is provided at a voltage output node 12 electrically coupled to the second channel terminal (e.g., source) of the third transistor *MP2* and the second channel terminal (e.g., source) of the fourth transistor *MP*1. A ground node *GND* electrically coupled to the second channel terminal (e.g., source) of the first transistor *MN*1 and the second channel terminal (e.g., source) of the second transistor *MN*2.

The existing full-wave active rectifier 10 requires a controller to provide appropriate control signals to the control terminal *GN1* of the first transistor *MN1* and the control terminal *GN2* of the second transistor *MN2.*

A problem with a known control of full-wave rectifiers is that accurate and optimised control of the active transistors requires additional and complex circuitry. This results in inefficiencies and reaction time limitations. Thus, control of existing full-wave rectifiers is challenging, and especially at high frequencies. Thus, there is a need for improved control of full-wave active rectifiers.

Embodiments of the invention solve the above problems with new control methods for the control of the active transistors of a full-wave active rectifier, and for the AC input *V_{AC_IN}* frequency tracking.

As a brief non-limiting overview of the invention, the present disclosure provides a method to predictively adjust the switching control of the active transistors of a full-wave active rectifier as part of a full-wave active rectifier system. Thereby, enabling a controller to operate with a high frequency AC voltage input signal *V_{AC_IN}.* The full-wave active rectifier system is arranged to monitor at least one node of the AC voltage input signal *V_{AC_IN}* to identify the frequency of the AC voltage input signal *V_{AC_IN}* and the detect if an active transistor was switched to an on-state or an off-state either too early or too late by sensing a voltage transient present due to conduction of one of the active transistors.

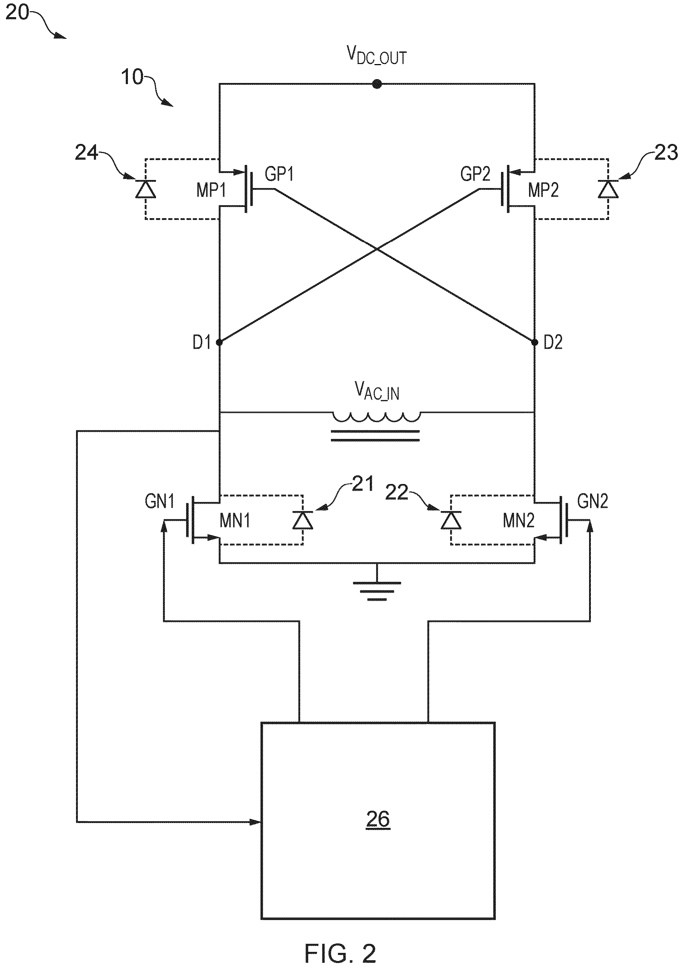

Figure 2 shows an example of a schematic block wiring diagram of a full-wave active rectifier system 20 for carrying out the method in accordance with the invention. The full-wave active rectifier system 20 comprises a full-wave rectifier 10 and a controller 26. Figure 2 shows that the voltage source of the AC voltage input signal *V_{AC_IN}* is provided by a secondary coil of an inductive charging antenna. That is, the full-wave active rectifier system 20 may be coupled to a larger battery charging system, whereby a battery is charged from a power source via the full-wave active rectifier system 20. In such systems efficiency of the full-wave active rectifier system 20 is prioritised in order to reduce charging time, and reduce any heating effect. The AC voltage input signal *V_{AC_IN}* may have an operating frequency of greater than 20MHz, as the full-wave active rectifier system 20 is well suited to operating at high frequencies. The AC voltage input signal *V_{AC_IN}* may have an operating frequency of between 5 and 20MHz, or between 13 and 14MHz.

The controller 26 generates a first control signal provided to the control terminal *GN1* of the first transistor *MN1.* In response to the first control signal the first transistor *MN1* either operates in an on-state or an off-state. That is, the controller 26 controls when the first transistor *MN1* switches between an on-state and an off-state. In the on-state the first transistor *MN1* is in its triode region. In the off-state the first transistor *MN2* is in its cut-off region.

The full-wave active rectifier system 20 is configured to, when the first transistor *MN1* is in an off-state (i.e., the first control signal of the controller 26 indicates that the first transistor *MN1* is operating in the off-state), monitor a first voltage at the first node D1 shared by the AC voltage input signal *V_{AC_IN}* and the first terminal of the first transistor *MN*1. The full-wave active rectifier system 20 is configured to sense a voltage transient in the first voltage caused by switching the first transistor *MN1* between its on-state and its off-state. Each transistor *MN1,MN2,MP2,MP1* comprises a respective body diode 21, 22, 23, 24 intrinsic to the transistor's structure. The body diode 21 of the first transistor *MN1* will conduct when the voltage between its anode and cathode is greater than its cut-off voltage, e.g. greater than 0.3V.

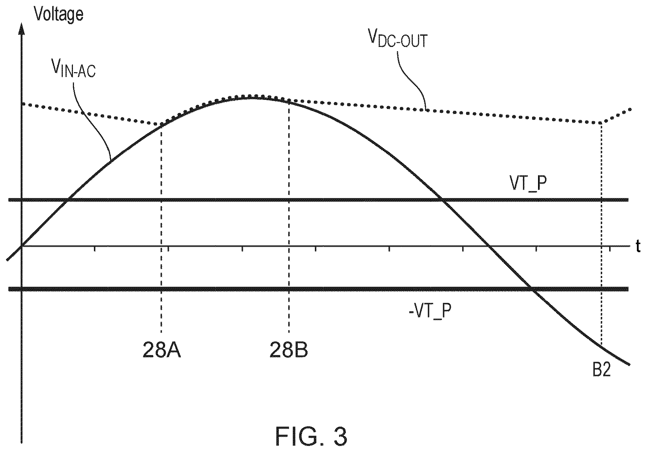

Figure 3 shows a graph of a partial cycle of the AC voltage input signal *V_{AC_IN},* showing an activation phase-angle 28A and a deactivation phase-angle 28B of the first transistor *MN1.* The result of the first transistor being in its on-state between activation phase-angle 28A and the deactivation phase-angle 28B is the DC voltage output signal *V_{DC_OUT}.*

The controller 26 is configured to control, in response to sensing the voltage transient, a phase-angle (e.g., 28A or 28B) at which the first transistor *MN1* switches between an on-state and an off-state. The phase-angle is relative to a period of the AC voltage input signal *V_{AC_IN}.* For example, the controller 26 may be configured to switch the first transistor *MN1* from the off-state to the on-state at a phase-angle of 80 degrees, and in response to sensing the voltage transient the phase-angle may be adjusted to 79 degrees. Thus, during the next period of the AC voltage input signal *V_{AC_IN},* the controller 26 may be configured to switch the first transistor *MN1* from the off-state to the on-state at a phase-angle of 79 degrees.

Advantageously, the full-wave active rectifier system 20 provides a method of controlling the switching of the first transistor *MN1* and optimising its switching. The optimisation is based on an indication that the full-wave active rectifier system 20 would operate more efficiently if the phase-angle, at which the first transistor *MN1* switches between an on-state and an off-state, is adjusted. Moreover, the full-wave active rectifier system 20 provides a method which can operate with a high frequency AC voltage input signal *V_{AC_IN}.*

The phase-angle may be an activation phase-angle 28A. At the activation phase-angle 28A of the first transistor *MN1,* the first transistor *MN1* switches from its off-state to its on-state. The activation phase-angle 28A may be controlled, by the controller 26, to anticipate the switching of the first transistor *MN1* from its off-state to its on-state in response to sensing the voltage transient.

The activation phase-angle 28A may be controlled to delay the switching of the first transistor *MN1* from its off-state to its on-state in response to not sensing the voltage transient within a period of the AC voltage input signal *V_{AC_IN}.* That is, determining the absence of the voltage transient within a period of the AC voltage input signal *V_{AC_IN}.* In an example, this period is determined based on the first transistorMN1 from its off-state to its on-state. Not sensing the voltage transient within this period of the AC voltage input signal *V_{AC_IN}* indicates that the first transistor *MN*1 is in its on-state too early in the cycle of the AC voltage input signal *V_{AC_IN}.*

During a period of the AC voltage input signal *V_{AC_IN},* the full-wave active rectifier system 20 may be configured to sense a first voltage transient and a second voltage transient in the first voltage caused by switching the first transistor *MN1* between its on-state and its off-state. The first voltage transient may correspond to the timing of the first transistor *MN1* switching from its off-state to its on-state (i.e., at the activation phase-angle 28). The second voltage transient may correspond to the timing of the first transistor *MN1* switching from its on-state to its off-state (i.e., at a deactivation phase-angle 28B).

The controller 26 may be configured to control, in response to sensing the second voltage transient, the deactivation phase-angle 28B at which the first transistor *MN1* switches from its on-state to its off-state. The deactivation phase-angle 28B may be controlled, by the controller 26, to delay the switching of the first transistor *MN*1 from the on-state to the off-state in response to sensing the second voltage transient. Alternatively, the deactivation phase-angle 28B at which the first transistor *MN1* switches from its on-state to its off-state may be pre-determined.

The deactivation phase-angle 28B may be controlled to anticipate the switching of the first transistor *MN1* from its on-state to its off-state in response to not sensing the second voltage transient within a period of the AC voltage input signal *V_{AC_IN}.* In an example, this period is determined based on the first transistorMN1 from its on-state to its off-state. Not sensing the second voltage transient within a period of the AC voltage input signal *V_{AC_IN}* indicates that the first transistor *MN*1 is in its off-state too late in the cycle of the AC voltage input signal *V_{AC_IN}.*

Although, switching of the first transistor *MN1* is described, it will be appreciated that the controller 26 generates a second control signal provided to the control terminal *GN2* of the second transistor *MN2.* The controller 26 may be configured to control, in response to sensing the (first and/or second) voltage transient, a second (activation and/or deactivation) phase-angle at which the second transistor *MN2* switches between an on-state and an off-state. For example, under the assumption that the AC voltage input signal *V_{AC_IN}* is symmetrical, the second phase-angle at which the second transistor *MN2* switches between an on-state and an off-state may be 180° out of phase to the phase-angle (28A or 28B) at which the first transistor *MN1* switches between an on-state and an off-state.

The full-wave active rectifier system 20 may be configured to, when the second transistor *MN2* is in an off-state (i.e., the second control signal of the controller 26 indicates that the second transistor *MN2* is operating in the off-state), monitor a second voltage at the second node D2 shared by the AC voltage input signal *V_{AC_IN}* and the first terminal of the second transistor *MN*2. The full-wave active rectifier system 20 may be configured to sense a voltage transient in the second voltage caused by switching the second transistor *MN2* between its on-state and its off-state.

The controller 26 may be configured to control, in response to sensing the voltage transient in the second voltage, a second phase-angle at which the second transistor *MN2* switches between an on-state and an off-state. The second phase-angle is relative to the period of the AC voltage input signal *V_{AC_IN}.* The controller may sense two voltage transients in the second voltage during the period of the AC voltage input signal *V_{AC_IN}.* The controller 26 may control a second activation phase-angle and/or a second deactivation phase-angle of the second transistor *MN2* similarly to as described above with reference to the first transistor *MN1.* Advantageously, controlling a second activation phase-angle and/or a second deactivation phase-angle of the second transistor *MN2* in response to sensing one or more voltage transients in the second voltage within the period of the AC voltage input signal *V_{AC_IN},* say independently from the control of the first transistor *MN1,* provides the capability to handle even a non-symmetrical AC voltage input signal *V_{AC_IN},* thereby providing improved efficiency of the full-wave active rectifier system 20.

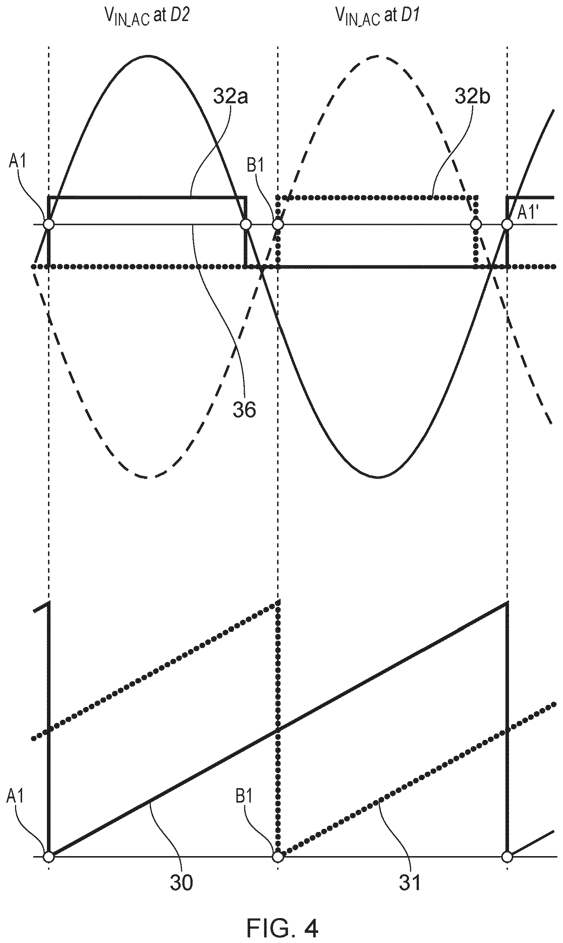

Figure 4 shows a graph of a cycle of the AC voltage input signal *V_{AC_IN}* corresponding to a ramp signal 30. The ramp signal 30 may be used to determine the conduction angle of the first transistor *MN*1. A first switching signal 32a is high when the fourth transistor *MP*1 is in its on-state, and is low when the fourth transistor *MP*1 is in its off-state. A second switching signal 32b is high when the third transistor *MP*2 is in its on-state, and is low when the third transistor *MP2* is in its off-state.

The controller 26 may be configured to generate a first ramp signal 30 and a second ramp signal 31 based on the frequency of the AC voltage input signal. As shown in Figure 4, the first ramp signal 30 and the second ramp signal 31 is reset once per cycle of the AC voltage input signal *V_{AC_IN}.*

As shown in Figure 4, the controller 26 is configured to generate and reset the first ramp signal 30 when the fourth transistor *MP*1 is switched from its off-state to its on-state (i.e., at point in time/phase-angle labelled A1 of Figure 4). That is, full-wave active rectifier system 20 is configured to determine that the gate threshold voltage 36 of the fourth transistor*MP*1 is reached and/or exceeded. The controller 26 may be also configured to generate or reset the second ramp signal 31 when the third transistor *MP2* is switched from its off-state to its on-state (i.e., at point in time/phase-angle labelled B1 of Figure 4). That is, full-wave active rectifier system 20 is configured to determine that the gate threshold voltage of the third transistor MP2 is reached and/or exceeded.

In alternative examples, the first ramp signal 30 may be reset twice per cycle of the AC voltage input signal *V_{AC_IN}* and there may be no second ramp signal 31. This example may be advantageous if the AC voltage input signal *V_{AC_IN}* is symmetrical. The first ramp signal 30 may be reset at any phase angle of the AC voltage input signal *V_{AC_IN}.* In alternative examples, the controller 26 may be configured to reset the ramp signal 30 when the fourth transistor *MP*1 is switched from its on-state to its off-state. In the alternative example where the ramp signal 30 is reset twice per cycle of the AC voltage input signal *V_{AC_IN},* then the controller 26 may be configured to generate/reset the ramp signal 30 when the third transistor *MP*2 is switched between its off-state and its on-state.

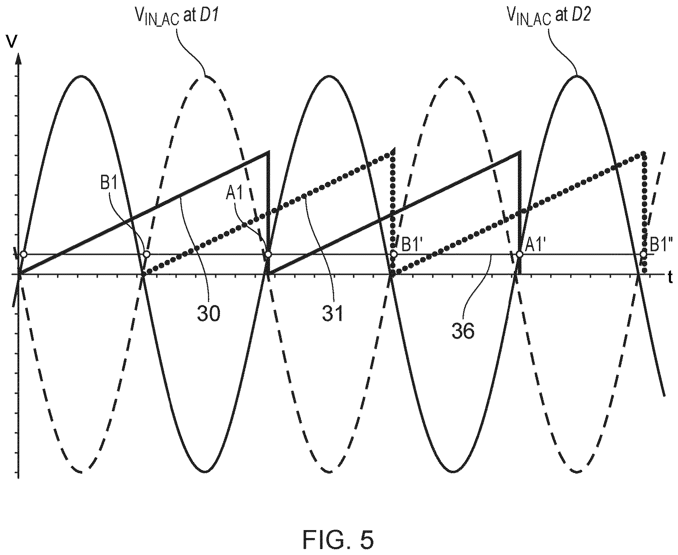

Figure 5 shows multiple cycles of the AC voltage input signal *V_{AC_IN}* with the first ramp signal 30 and second ramp signal 31.

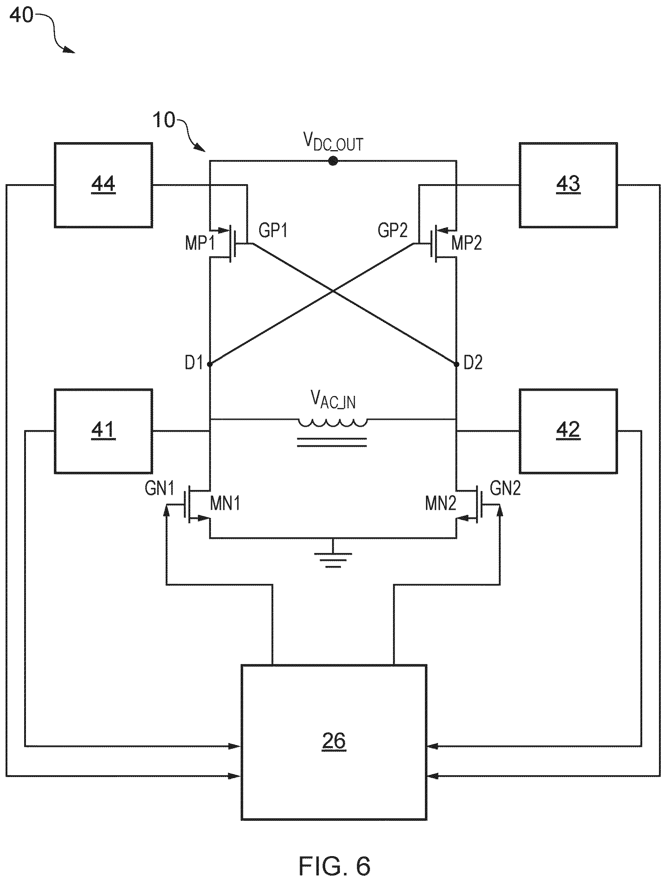

Figure 6 shows an example of a schematic block wiring diagram of a full-wave active rectifier system 40 for carrying out the method in accordance with the invention. The full-wave active rectifier system 40 of Figure 6 has some of the same components as the system of Figure 2, in addition to certain optional features. The same reference numerals are used to denote the same/corresponding features in relation to Figure 2 and will not be described in detail again below.

Figure 6 shows, at first block 41, means for comparing the voltage at the first node D1 to a control voltage threshold. The sensing of the voltage transient in the first voltage (at the first node D1) is based on the output of the first block 41. Figure 6 shows, at second block 42, means for comparing the voltage at the second node D2 to a control voltage threshold. The sensing of the voltage transient in the first voltage (at the second node D2) is based on the output of the second block 42. Figure 6 also shows, at third block 43, means for determining when the third transistor *MP2* is switched between its off-state and on-state, or simply for determining when the third transistor *MP2* is switched from its off-state to its on-state. The first ramp signal 30 may be reset based on the output from the third block 43. Figure 6 shows, at fourth block 44, means for determining when the fourth transistor *MP*1 is switched between its off-state and on-state, or simply for determining when the fourth transistor *MP*1 is switched from its off-state to its on-state. The second ramp signal 31 may be reset based on the output from the fourth block 44. Although the first to fourth blocks 41, 42, 43, 44 are shown as distinct blocks in Figure 6, each block may be implemented by the controller 26.

The control voltage threshold may be predetermined to be slightly below DC ground level (GND), for example at -70mV. Advantageously, this ensures that the body diode turn-on threshold is not met and the body diode of the first and/or second transistor *MN*1, *MN*2 is not activated. Thus, avoiding losses and improving efficiency by avoiding reverse conduction.

Moreover, the control voltage threshold being slightly negative beneficially adds a buffer to compensate for dynamic error and offset when the control voltage threshold is met in order to avoid that the low-side FETs conduct when the AC input voltage has reversed polarity, which would severely impact the efficiency.

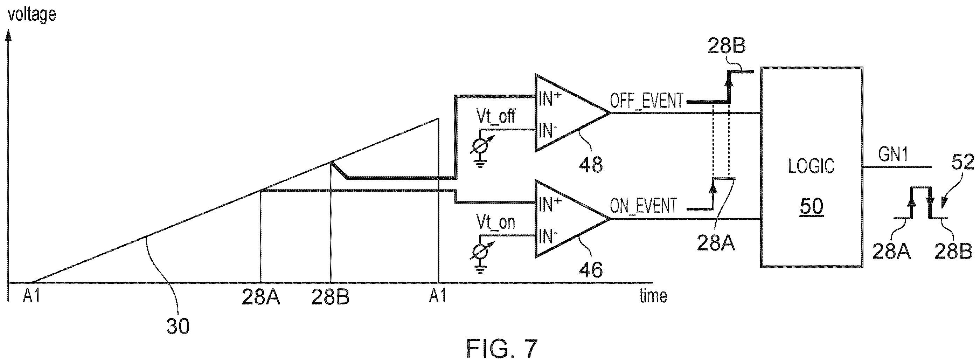

Figure 7 illustrates a method of the controller 26 to generate the first control signal 52 provided to the control terminal *GN1* of the first transistor *MN1* based on the ramp signal 30. Since the ramp signal 30 corresponds to the frequency of the AC voltage input signal *V_{AC_IN},* each point on the ramp signal 30 corresponds to a phase-angle of the AC voltage input signal *V_{AC_IN}.* The controller 26 generates an activation threshold voltage Vt_on and a deactivation threshold voltage Vt_off. The controller 26 monitors the first ramp signal 30 and compares the voltage of the ramp signal 30 to the activation threshold Vt_on (e.g., via first comparator 46), and a deactivation threshold Vt_off (e.g., via first comparator 48). Thus, the activation phase-angle 28A is determined by the ramp signal 30 reaching the activation threshold voltage Vt_on. The deactivation phase-angle 28B is determined by the ramp signal 30 reaching the deactivation threshold voltage Vt_off. The deactivation threshold voltage Vt_off is therefore greater than the activation threshold voltage Vt_on. The controller 26 may control the activation phase-angle 28A and/or the deactivation phase-angle 28B of the first transistor *MN1* by varying the activation threshold voltage Vt_on and/or the deactivation threshold voltage Vt_off respectively.

The controller 26 may use logic 50 to generate the first control signal 52 provided to the control terminal *GN1* of the first transistor *MN1* based on the comparisons (e.g., outputs of the first and second comparators 46, 48).

Although Figure 7 shows an example of generating the first control signal 52, similarly the second control signal provided to the control terminal *GN2* of the second transistor *MN2* may be based on the second ramp signal 31. Alternatively, if the AC voltage input signal *V_{AC_IN}* is symmetrical, then the second control signal may be based on the first ramp signal 30.

Advantageously, the method of the controller 26 illustrated by Figure 7 allows a single ramp signal to be used to switch on and off one or more transistors *MN1,MN2.* Although preferably, a respective ramp signal 30, 31 may be used to switch on and off a corresponding transistor *MN1,MN2.* Respective ramp signals 30, 31 for each first and second transistor *MN1,MN2* which may be generated/reset one half cycle earlier than when it is actually strictly needed (as shown in Figure 5). Advantageously, this reduces the impact of comparator 46, 48 delays on the dynamic range of the switch on/off timings, thereby relaxing the quiescent current requirements.

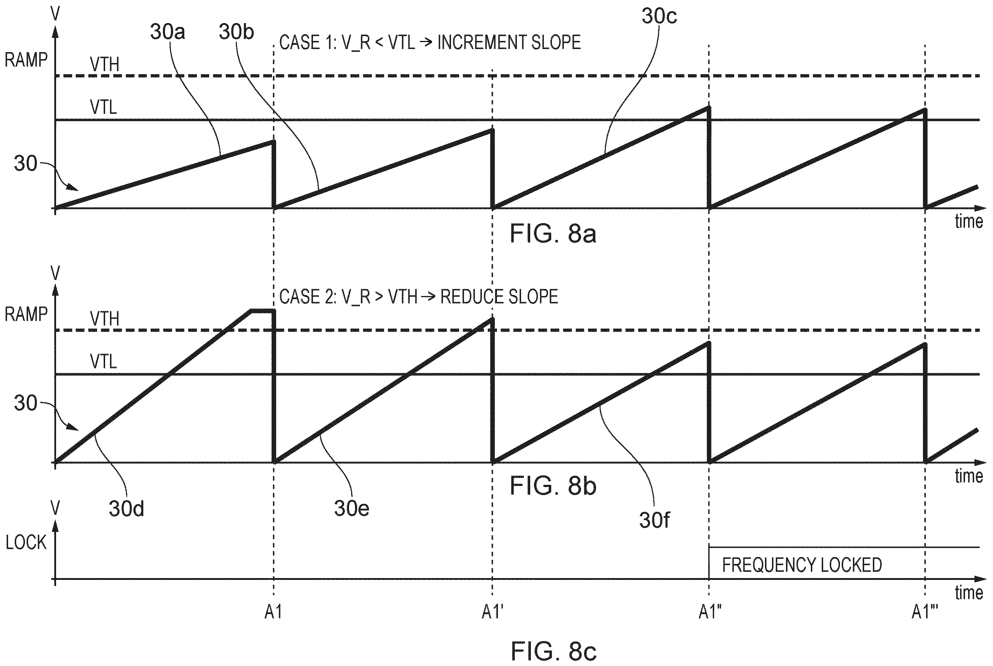

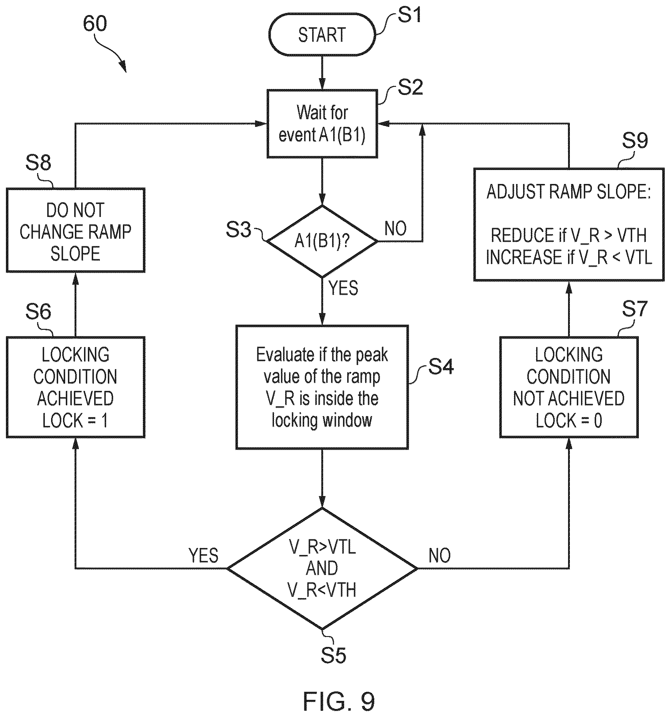

The full-wave active rectifier system 20 may be adapted to accept an AC voltage input signal *V_{AC_IN}* at a specific predetermined frequency, or a predetermined narrow frequency range based on at least some features of Figures 4 to 7. However, in an example, the full-wave active rectifier system 20 may be arranged to accept and adapt to an AC voltage input signal *V_{AC_IN}* with wide range of possible frequencies. The associated description of Figures 8 to 9 describes the principles, and algorithm to enable frequency tracking. Specifically, Figure 9 illustrates the process of a frequency tracking algorithm.

The controller 26 may be configured to determine the period (or frequency) of the AC voltage input signal *V_{AC_IN},*

Figures 8a, 8b, and 8c show three graphs demonstrating increasing or decreasing the rate of change of the first ramp signal 30 until the rate of the change of the first ramp signal 30 tracks the frequency of the AC voltage input signal *V_{AC_IN}.* Specifically, figure 8 illustrates a result of a frequency tracking algorithm to control the rate of change of the first ramp signal 30, such that the dynamic range of the activation threshold voltage Vt_on and the deactivation threshold voltage Vt_off are within a suitable range for the controller 26. Advantageously, controlling the dynamic range of the first ramp signal 30 enables the full-wave active rectifier system to operate at a wide range of frequencies, thus enabling the full-wave active rectifier 10 to operate at high efficiency. In contrast, if the rate of change of the first ramp signal 30 was constant, then at low frequencies the first ramp signal 30 may peak and plateau at the supply voltage, thus limiting the maximum phase-angle possible with the Vt_on and Vt_off to less than 360° and limiting the resolution of Vt_on and Vt_off to a least significant bit of a digital-to-analog converter (DAC) of the controller 26. In addition, if the rate of change of the first ramp signal 30 was constant, then at high frequencies the first ramp signal 30 may peak well below the supply voltage, thus limiting the resolution of Vt_on and Vt_off to a least significant bit of a DAC of the controller 26. In both scenarios, this will result in a small number of possible phase-angles for the activation and deactivation phase-angles 28A, 28B. Thus, limiting the efficiency of the full-wave active rectifier 10.

Figures 8a and 8b both shows a graph of changing voltage over time. Figures 8a and 8b show the first ramp signal 30 increasing and decreasing its rate of change each time it is reset at point in time/phase-angle labelled A1, A1', A1", respectively. Figures 8a and 8b each show two voltage thresholds: a lower threshold *V_{TL}* and an upper threshold *V_{TU}.*

The controller 26 is configured to operate the frequency tracking algorithm to determine a peak value of the first ramp signal 30. The controller 26 is configured to increase the rate of change of a subsequent ramp if the peak fails to exceed a lower threshold *V_{TL},* or decrease the rate of change of a subsequent ramp if the peak exceeds an upper threshold *V_{TU}.*

Therefore, the rate of change of the first ramp signal 30 corresponds to the frequency of the AC voltage input signal *V_{AC_IN}.* Advantageously, the rate of change of the first ramp signal 30 ensures that the full-wave active rectifier system 20, 40 maintains a high accuracy and resolution when the controller 26 is operated in accordance in/with the arrangement shown in Figure 7 to generate first control signal 52.

Figure 8a shows a first ramp 30a of the first ramp signal 30 which fails to exceed the lower threshold *V_{TL}* at point in time/phase-angle labelled A1. Thus, the controller 26 increases the rate of change of a second ramp 30b of the first ramp signal 30. The second ramp 30b of the first ramp signal 30 fails to exceed the lower threshold *V_{TL}* at point in time/phase-angle labelled A1'. Thus, the controller 26 increases the rate of change of a third ramp 30c of the first ramp signal 30. The third ramp 30c of the first ramp signal 30 exceeds the lower threshold *V_{TL}* at point in time/phase-angle labelled A1" and is less than the upper threshold *V_{TU}.* therefore, the graph of Figure 8c shows the frequency is locked, i.e., the rate of change of the first ramp 30 is maintained.

For each cycle (i.e., from point in time/phase-angle labelled A1 to the next point in time/phase-angle labelled A1'), the rate of increase of the rate of change of the first ramp 30 may increase by a predetermined amount corresponding to a DAC resolution (preferably the least significant bit (LSB)) of the DAC. In an alternative example, the controller 26 may adaptively change the rate of increase of the rate of change of the first ramp 30 based on the voltage difference between the peak value and the lower threshold *V_{TL}.*

Figure 8b shows a fourth ramp 30d of the first ramp signal 30 which exceeds the upper threshold *V_{TU}* at point in time/phase-angle labelled A1. Thus, the controller 26 decreases the rate of change of a fifth ramp 30e of the first ramp signal 30. The fifth ramp 30e of the first ramp signal 30 exceeds the upper threshold *V_{TU}* at point in time/phase-angle labelled A1'. Thus, the controller 26 decreases the rate of change of a sixth ramp 30f of the first ramp signal 30. The sixth ramp 30f of the first ramp signal 30 is less than the upper threshold *V_{TU}* at point in time/phase-angle labelled A1" and exceeds than the lower threshold *V_{TL},* therefore, the graph of Figure 8c shows the frequency is locked, i.e., the rate of change of the first ramp 30 is maintained.

As shown in Figure 8c, the frequency may be considered to be 'locked' when the controller 26 determines that two (or more) sequential ramps of the first ramp signal 30 (e.g., in regular succession, without gaps) have peak values which are less than the upper threshold *V_{TU}* and greater than the lower threshold *V_{TL}.* The frequency tracking algorithm is then configured to maintain the rate of change of a first ramp signal 30 if the peak value remains less than (or equal to) the upper threshold *V_{TU}* and greater than (or equal to) the lower threshold *V_{TL}.*

Figures 8a, 8b, and 8c show the effect of the frequency tracking algorithm 60 with respect to the first ramp signal 30. However, the frequency tracking algorithm may also be used to independently control the rate of change of the second ramp signal 31 in a similar way.

Figure 9 shows a process of the frequency tracking algorithm 60 which may be applied to the first and/or second ramp signals 30, 31. Specifically, the frequency tracking algorithm 60 may comprise the following steps:
At step S1, the process initiates and then enters a waiting state at step S2 and decision step S3, for the fourth transistor *MP1* to switch from its off-state to its on-state (i.e., at point in time/phase-angle labelled A1 of Figure 4).
At process step S4, the process determines a peak value of the first ramp signal 30 (e.g., once per cycle of the AC voltage input signal *V_{AC_IN}*) upon determining the fourth transistor *MP1* to switch from its off-state to its on-state (i.e., at point in time/phase-angle labelled A1 of Figure 4).
At decision step S5, the peak value is compared to the upper threshold *V_{TU}* and the lower threshold *V_{TL}.* If the peak value is greater than the lower threshold *V_{TL}* and less than the upper threshold *V_{TU}.* then the process continues to process step S6. If the peak value is less than the lower threshold *V_{TL}* or greater than the upper threshold *V_{TU}.* then the process continues to process step S7.
At process step S6, the controller 26 signals that the locking condition is achieved, and at process step S8, the controller 26 does not adjust the rate of change of the first ramp signal 30.
At process step S7, the controller 26 signals that the locking condition is not achieved, and at process step S9, the controller 26 is configured to adjust the rate of change of the first ramp signal 30. Specifically, if the peak value is equal to or greater than the upper threshold *V_{TU}.* than the rate of change of the first ramp 30 is reduced. If the peak value is equal to or less than the lower threshold *V_{TL},* than the rate of change of the first ramp 30 is increased.

As it can be seen in Figure 9, the frequency tracking algorithm 60 repeats. This frequency tracking algorithm 60 ensures precise control of the ramp slope (i.e., rate of change of the first ramp signal 30), for maintaining system stability and performance within defined operational thresholds. The frequency tracking algorithm 60 is shown with respect to the first ramp signal 30. However, the frequency tracking algorithm may also be used to independently control the rate of change of the second ramp signal 31 in a similar way.

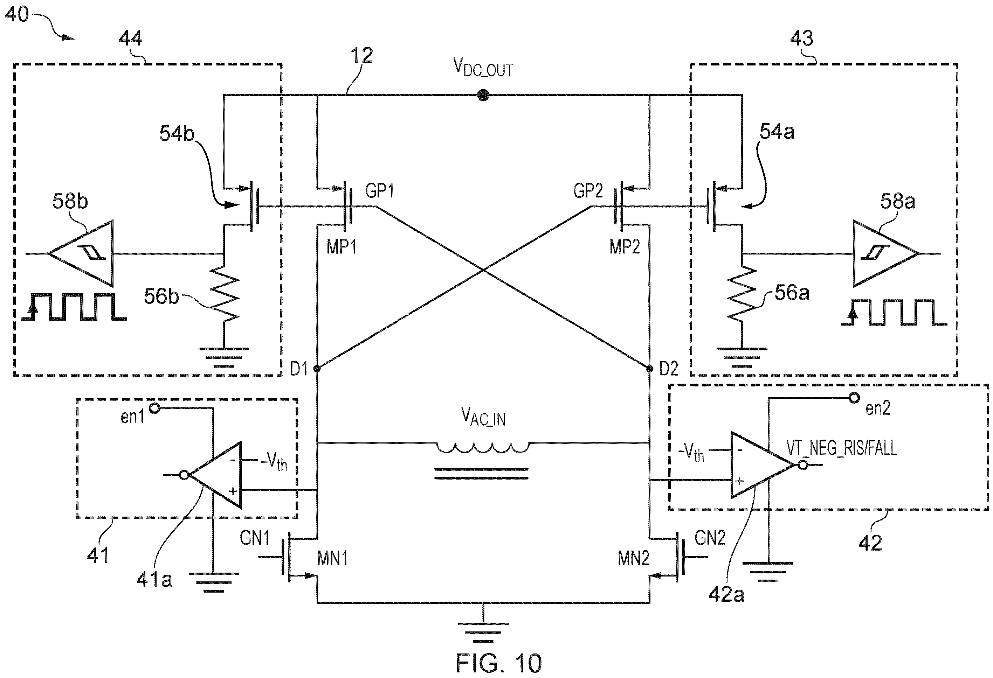

Figure 10 shows an example of a schematic block wiring diagram of a full-wave active rectifier system 40 for carrying out the method in accordance with the invention. The full-wave active rectifier system 40 of Figure 10 shows certain optional examples of the first block 41, second block 42, third block 43, and fourth block 44. The same reference numerals are used to denote the same/corresponding features in relation to Figure 6 and will not be described in detail again below. The controller 26 is not shown in Figure 10 for clarity purposes, it will be understood that the outputs of the first block 41, second block 42, third block 43, and fourth block 44 may be provided to the input of the controller 26.

As shown in Figure 10, the third block 43 comprises a first sense transistor 54a (which may also be called a fifth transistor), a first resistor 56a, and a first comparator 58a. The first sense transistor 54a is arranged to switch between its off-state and oon-state, when the third transistor *MP2* is switched between its off-state and on-state. The first comparator 58a is arranged to sense if the first sense transistor 54a is arranged to switch between its off-state and on-state. The first ramp signal 30 may be reset based on the output from the first comparator 58a.

The control terminal of the first sense transistor 54a is electrically coupled to the control terminal *GP2* of the third transistor *MP2.* The second channel terminal (e.g., source) of the first sense transistor 54a is electrically coupled to the voltage output node 12. The first channel terminal (e.g., drain) of the first sense transistor 54a is electrically coupled to the first terminal of the first resistor 56a, and the input to the first comparator 58a. The second terminal of the first resistor 56a is electrically coupled to DC ground (GND). The first resistor 56a may be arranged to limit current flow from the DC voltage output signal *VDC_OUT* to DC ground (GND) when the first sense transistor 54a is in its on-state (e.g., be of high resistance). The first comparator 58a may be a Schmitt-trigger to provide noise immunity.

Although the third block 43 is described above, the fourth block 44 may provide corresponding components arranged in a similar way. For example, the fourth block 44 is shown comprising a second sense transistor 54b (which may also be called a sixth transistor), a second resistor 56b, and a second comparator 58b to correspond to the first sense transistor 54a, the first resistor 56a, and the first comparator 58a, respectively. The second ramp signal 31 may be reset based on the output from the second comparator 58b.

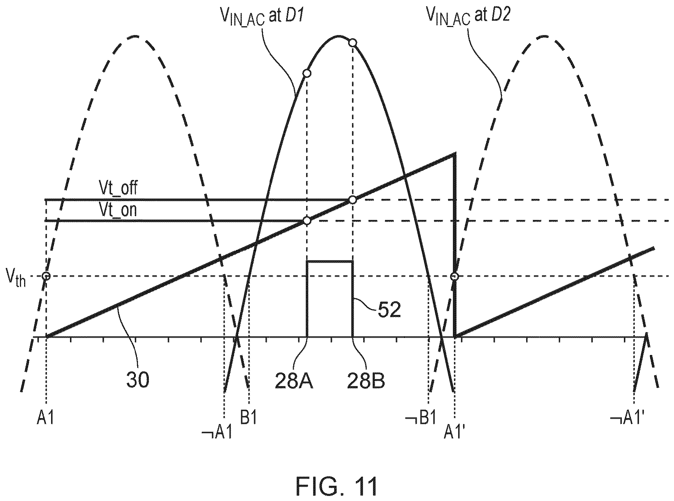

Figure 11 shows a graph of a cycle of the AC voltage input signal *V_{AC_IN}* corresponding to a ramp signal 30 and the first control signal 52. The first control signal 52 is provided to the control terminal *GN1* of the first transistor *MN1* which may be generated as shown in Figure 7. The second ramp signal 31 is not shown in Figure 11, but may also be present to generate the second control signal provided to the control terminal *GN2* of the second transistor *MN2* in a similar way.

Returning to Figure 10, the first block 41 comprises a first transient detection comparator 41a. The first transient detection comparator 41a comprising an input coupled to the first node D1 and configured to compare the first voltage to a control voltage threshold (-*Vₜₕ*). The second block 42 also comprises a second transient detection comparator 42a. The second transient detection comparator 42a comprises an input coupled to the second node D2 and configured to compare the second voltage to a control voltage threshold (-*Vₜₕ*). In some examples, only a single transient detection comparator 41a may be arranged to compare the voltage at the first node D1 and the second node D2 to a control voltage threshold (-*Vₜₕ*). Advantageously, two transient detection comparators 41a, 42a, provides redundancy and reduces processing at the controller 26, enabling a faster response by the controller 26. The sensing of the voltage transient at the first node D1 is based on the output of the first transient detection comparator 41a. The sensing of the voltage transient at the second node D2 is based on the output of the second transient detection comparator 42a. As shown in Figure 10, each of the first and second transient detection comparator 41a, 42a may be enabled and disabled via respective first and second comparator control signals en1, en2.

With reference to Figure 11, the first transient detection comparator 41a may be arranged to be deactivated when the first transistor *MN*1 is activated (i.e., at activation phase-angle 28A), and activated when the first transistor *MN*1 is deactivated (i.e., at deactivation phase-angle 28B). Advantageously, this avoids undesirable switching changes at output of first transient detection comparator 41a. Optionally, the first transient detection comparator 41a may also be arranged to be activated when the fourth transistor *MP*1 is deactivated (i.e., at phase-angle ¬A1), and deactivated when the third transistor *MP*2 is deactivated (i.e., at phase-angle ¬B1). Advantageously, since it is known that the first transient detection comparator 41a will not switch in this period, deactivating the first transient detection comparator 41a improves efficiency of the system.

The first comparator control signal en1 may be provided to disable (i.e., deactivate) the first transient detection comparator 41a when the first transistor *MN1* is switched from in its off-state to its on-state (i.e., at activation phase-angle 28A). That is, the first comparator control signal en1 may be provided to disable the first transient detection comparator 41a when the first ramp signal 30 reaches the activation threshold voltage Vt_on. Optionally, the first comparator control signal en1 may be provided to enable the first transient detection comparator 41a when the fourth transistor *MP1* is switched from its on-state to its off-state.

The first comparator control signal en1 may be provided to enable (i.e., activate) the first transient detection comparator 41a when the first transistor *MN1* is switched from in its on-state to its off-state (i.e., at deactivation phase-angle 28B). That is, the first comparator control signal en1 may be provided to enable the first transient detection comparator 41a when the first ramp signal 30 reaches the deactivation threshold voltage Vt_off. Optionally, the first comparator control signal en1 may be provided to disable the first transient detection comparator 41a when the third transistor *MP2* is switched from its on-state to its off-state.

Although the first transient detection comparator 41a and the first comparator control signal en1 are described above, the second transient detection comparator 42a and the second comparator control signal en2 may operate in a similar way. Specifically, the second transient detection comparator 42a may be arranged to be deactivated when the second transistor *MN2* is activated and arranged to be activated when the second transistor *MN2* is deactivated. Advantageously, this avoids undesirable switching changes at output of second transient detection comparator 42a. Optionally, the second transient detection comparator 42a may also be arranged to be activated when the third transistor *MP*2 is deactivated (i.e., at phase-angle ¬B1), and deactivated when the fourth transistor *MP*1 is deactivated (i.e., at phase-angle ¬A1). Advantageously, since it is known that the second transient detection comparator 42a will not switch in this period, deactivating the second transient detection comparator 42a may also improve efficiency of the system.

The second comparator control signal en2 may be provided to disable (i.e., deactivate) the second transient detection comparator 42a when the second transistor *MN2* is switched from in its off-state to its on-state. That is, the second comparator control signal en2 may be provided to disable the second transient detection comparator 42a when the second ramp signal 31 reaches a second activation threshold voltage (generated similarly but independently to the activation threshold voltage Vt_on). Optionally, the second comparator control signal en2 may be provided to enable the second transient detection comparator 42a when the third transistor *MP2* is switched from its on-state to its off-state.

The second comparator control signal en2 may be provided to enable (i.e., activate) the second transient detection comparator 42a when the second transistor *MN2* is switched from in its off-state to its on-state. That is, the second comparator control signal en2 may be provided to enable the second transient detection comparator 42a when the second ramp signal 31 reaches a second deactivation threshold voltage (generated similarly but independently to the deactivation threshold voltage Vt_off). Optionally, the second comparator control signal en2 may be provided to disable the second transient detection comparator 42a when the fourth transistor *MP1* is switched from its on-state to its off-state.

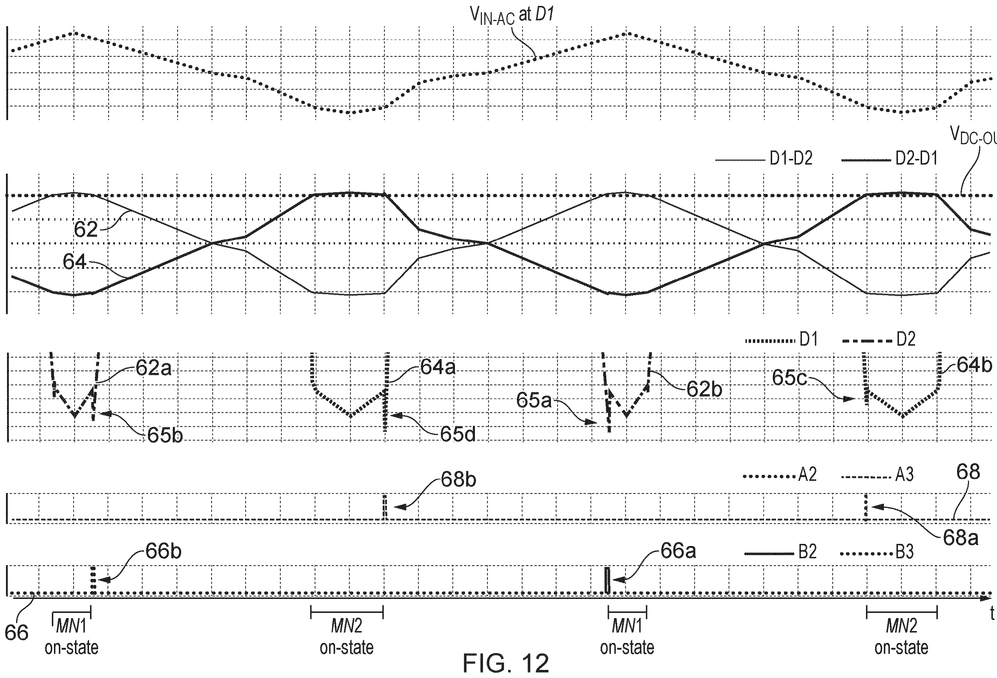

Figure 12 shows the output of the first and second transient detection comparators 41a, 41b with respect to the AC voltage input signal *V_{AC_IN}.* Two cycles of the AC voltage input signal *V_{AC_IN}* are shown in Figure 12, corresponding to the first transistor *MN*1 being in its on-state twice, and the second transistor *MN2* being in its on-state twice. The AC voltage input signal *V_{AC_IN}* is shown to be distorted. In examples, the full-wave active rectifier system 20, 40 may operate equally well if the AC input voltage signal *V_{AC_IN}* is sinusoidal, generic non-sinusoidal, or distorted.

A shown in Figure 12, the line graph labelled 62 shows the voltage difference between the first voltage at the first node D1 and the second voltage at the second node D2. The line graph labelled 64 shows the negative (i.e., f(x) to -f(x)) of line graph labelled 62. The partial line graphs 62a and 62b show a zoomed in version of the line graph labelled 62 referenced to the DC voltage output signal *V_{DC_OUT}.*

As shown in Figure 12, a first signal 66 is the output of the first transient detection comparator 41a (or generally the output of the first block 41). A second signal 68 is the output of the second transient detection comparator 42a (or generally the output of the second block 42). Figure 12 shows the second voltage transient 65b in partial line graph 62a, corresponding to the timing of the first transistor *MN1* switching from its on-state to its off-state. The second voltage transient 65b is detected by the first transient detection comparator 41a. The first transient detection comparator 41a generates a second flag 66b *[VT_NEG_RIS]* in the first signal 66. The second flag 66b *[VT_NEG_RIS]* may be a detectable high voltage in the first signal 66. The deactivation phase-angle 28B of the first transistor *MN1* may be controlled by the controller 26 in response to the second flag 66b *[VT_NEG_RIS]* of the first signal 66 (to change the timing of the first transistor *MN1* to its off-state).

Figure 12 shows the first voltage transient 65a in partial line graph 62b, corresponding to the timing of the first transistor *MN1* switching from its off-state to its on-state. The first voltage transient 65b is detected by the first transient detection comparator 41a to generate a first flag 66a [*VT_NEG_FAL*] in the first signal 66. The first flag 66a *[VT_NEG_FAL]* may be a detectable high voltage in the first signal 66. The activation phase-angle 28A of the first transistor *MN1* may be controlled by the controller 26 in response to the first flag 66a [*VT_NEG_FAL*] of the first signal 66 (to change the timing of the first transistor *MN1* to its on-state).

As shown in Figure 12, the partial line graphs 64a and 64b show a zoomed in version of the line graph labelled 64 referenced to the DC voltage output signal *V_{DC_OUT}.* The voltage transients (e.g., 65c, 65d) of partial line graphs 64a and 64b may be detected by the second transient detection comparator 42a to generate a first flag 68a *[VT_NEG_FAL]* and/or a second flag 68b *[VT_NEG_RIS]* in the second signal 68, in a similar way as described above. The activation phase-angle and/or the deactivation phase-angle of the second transistor *MN2* may be controlled by the controller 26 in response to the first flag 68a *[VT_NEG_FAL]* and/or the second flag 68b [*VT_NEG_RIS]* of the second signal 68, respectively (to change the timing of the second transistor *MN2* to its on-state or off-state, respectively).

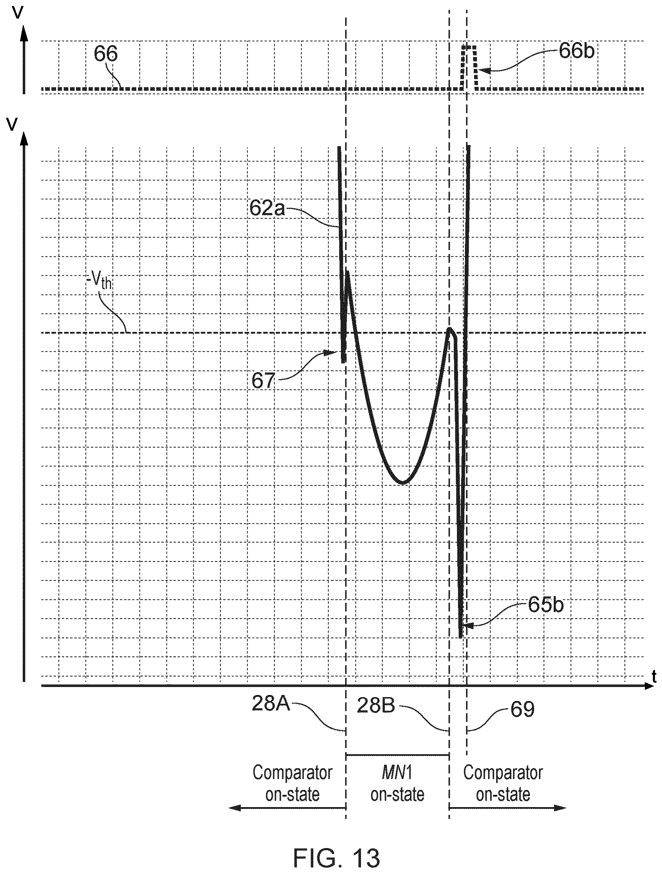

Figure 13 shows the partial line graph 62a of the voltage at the first node *D*1 at the input of the first transient detection comparator 41a and a corresponding graph showing the output (i.e., the first signal 66) of the first transient detection comparator 41a, with respect to time. The generation of the second flag 66b *[VT_NEG_RIS]* in the first signal 66 by the first transient detection comparator 41a indicates that the controller 26 controlled the first transistor *MN1* to switch between its on-state to its off-state too early. Therefore, by controlling the first transistor *MN1* to switch between its on-state to its off-state at a later point in time, the full-wave active rectifier system 20, 40 may operate more efficiently. In response to sensing the first voltage transient 65b, the controller 25 may control the deactivation phase-angle to delay the switching of the first transistor *MN1* from the on-state to the off-state (e.g., by increasing the deactivation threshold voltage Vt_off).

Although, Figure 13 shows the partial line graph 62a, it may be used to understand generally how any voltage transient (e.g., 65a, 65b, 65c, 65d) may be detected by either the first or second transient detection comparators 41a, 42a.

Figure 13 shows the activation phase-angle 28A and the deactivation phase-angle 28B of the first transistor *MN*1.As described at Figures 10 and 11, the first transient detection comparator 41a may be disabled when the first transistor *MN*1 is in its on-state. That is, the first transient detection comparator 41a is disabled at the activation phase-angle 28A of the first transistor *MN1,* and enabled at the deactivation phase-angle 28B of the first transistor *MN1.* The first transient detection comparator 41a is configured to compare the voltage represented by the partial line graph 62a to the control voltage threshold (-*Vₜₕ,* e.g., -70mV). The first transient detection comparator 41a is configured to switch the first signal 66 to be high (as shown by the second flag 66b [*VT_NEG_RIS]*) if the voltage represented by the partial line graph 62a is less than the control voltage threshold (-*Vₜₕ*). The second voltage transient 65b is caused by the first transistor *MN*1 switching to its off-state. This results in the second voltage transient 65b corresponding to the voltage of the AC voltage input signal *V_{AC_IN}* at the first node *D*1 (i.e., not connected to the ground node *GND*).

Figure 13 shows that the second voltage transient 65b exceeds the control voltage threshold (-*Vₜₕ*) between the deactivation phase-angle 28B and the phase-angle labelled 69. The first transient detection comparator 41a detects the second voltage transient 65b and generates the second flag 66b *[VT_NEG_RIS].* There may be a delay (as shown in Figure 13) between the second voltage transient 65b and the generation of the second flag 66b *[VT_NEG_RIS]* due to limitation in the circuitry speed. However, advantageously, this delay does not impact the efficacy of the full-wave active rectifier system 20, 40 since the controller 26 acts upon the second flag 66b *[VT_NEG_RIS]* (to delay the switching of the first transistor *MN*1 from the on-state to the off-state) in the next cycle of the AC voltage input signal *V_{AC_IN}.* Figure 13 also shows a minor voltage transient 67 before the first transient detection comparator 41a is disabled at the first transistor *MN*1 activation phase-angle 28A. However, due to circuit speed limitations, the minor voltage transient 67 is not present for long enough for the first transient detection comparator 41a to sense it and/or generate the first flag 66a *[VT_NEG_FAL]* in the first signal 66.

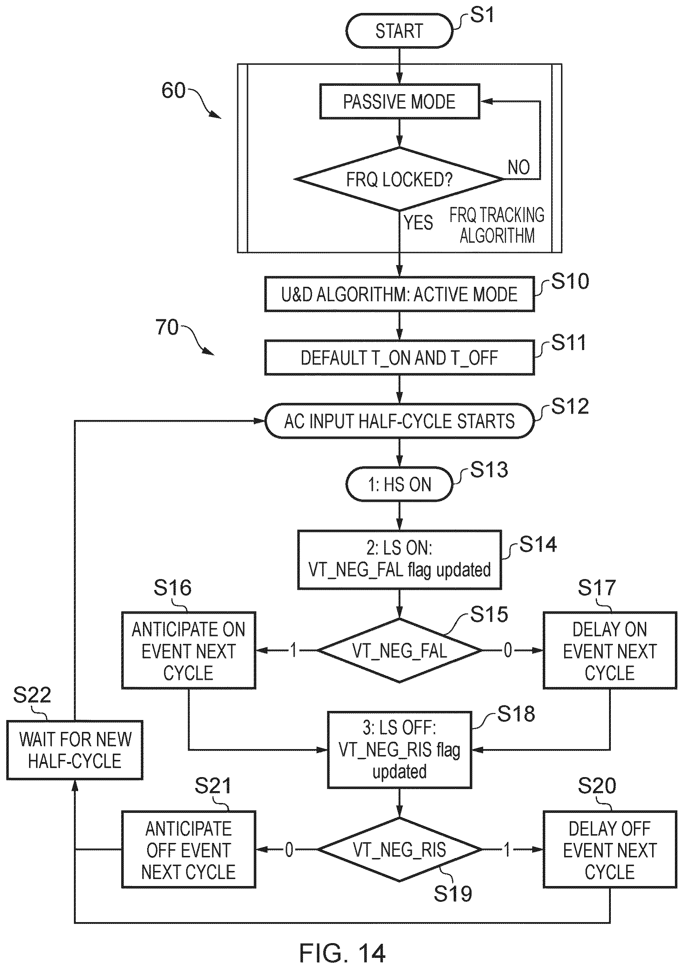

In an example, a transient detection comparator 41a, 42a may generate a flag signal 66a, 66b, 68a, 68b indicating that the voltage at node D1 and/or D2 exceeds the control voltage threshold. The controller may be configured to control the phase-angle of the first or second transistors *MN1,MN2* based on the flag signal 66a, 66b, 68a, 68b and the determination that the first or second transistor *MN1,MN2* is switched between the on-state and the off-state. For example, the controller 26 may be configured to generate a signal which switches the first or second transistors *MN1,MN2* between their respective on-states and off-states, therefore, the controller 26 may determine a correspondence between the received flag signal 66a, 66b, 68a, 68b and the control of the first or second transistor *MN1,MN2.* Thus, the controller 26 may determine based on the received flag signal 66a, 66b, 68a, 68b and the determination that the first or second transistor *MN1,MN2* is switched between the on-state and the off-state, if the activation or deactivation phase-angle should be anticipated or delayed, in accordance, for example, with Figure 14 discussed below.

Figure 14 shows a process of an adjustment algorithm 70 which may be applied by the controller 26 to control, in response to sensing the voltage transient, a phase-angle (e.g., 28A or 28B of Figure 7) at which the first transistor *MN1* switches between an on-state and an off-state. The adjustment algorithm 70 may be applied to anticipate or delay the switching of the first transistor *MN1* from its off-state to its on-state, and anticipate or delay the switching of the first transistor *MN1* from its on-state to its off-state. Advantageously, the adjustment algorithm 70 improves efficiency of the full-wave rectifier system 20, 40 via control of the activation phase-angle and/or deactivation phase angle of the first transistor *MN1.*

The full-wave active rectifier system 20, 40 may perform the process of the frequency tracking algorithm 60 (i.e., steps S1 to S9) before the process of the adjustment algorithm 70 as shown in Figure 12. In an alternative example, the frequency of the AC voltage input signal *V_{AC_IN}* is known and the rate of change of the first ramp signal 30 is predetermined.

Specifically, the adjustment algorithm 70 may comprise the following steps:

At step S10, the process initiates upon determining that the frequency tracking algorithm 60 achieves a locking condition.

At optional step S11, upon start-up of the full-wave active rectifier system 20, 40, the controller 26 is arranged to set the activation phase-angle 28A equal to the deactivation phase-angle 28B. That is, the activation threshold voltage Vt_on may be set equal to the deactivation threshold voltage Vt_off. The activation phase-angle 28A and the deactivation phase-angle 28B of the first transistor *MN1* may be set at the peak value of the AC voltage input signal *V_{AC_IN}* at the first node D1. The activation phase-angle and the deactivation phase-angle of the second transistor *MN2* may be set at the peak value of the AC voltage input signal *V_{AC_IN}* at the second node D2 (or 180° out of phase to activation phase-angle 28A and the deactivation phase-angle 28B of the first transistor *MN*1)*.* For example, the activation threshold voltage Vt_on and deactivation threshold voltage Vt_off may be set to be approximately 75% (or, 70%) of the peak value of the first ramp signal 30.

At step S12, the controller 26 determines an appropriate point in the cycle of the AC voltage input signal *V_{AC_IN}* to begin. For example, the controller 26 determines that a new half cycle of the AC voltage input signal *V_{AC_IN}* begins.

At step S13, the third transistor *MP2* is switched from its off-state to its on-state.

At step S14, the first block 41 compares the voltage at the first node D1 to the control voltage threshold (*-Vₜₕ*). The first block 41 generates the first signal 66 which may or may not comprise the first flag 66a *[VT_NEG_FAL].* In addition, the first transistor *MN1* is switched from its off-state to its on-state.

At decision step S15, the controller 26 determines if a first voltage transient 65a is detected and corresponds to switching the first transistor *MN1* from its off-state to its on-state. For example, the first transient detection comparator 41a generates the first signal 66 comprising the first flag 66a [*VT_NEG_FAL]*)*,* and the controller 26 detects the presence or absence of the first flag 66a in the first signal 66. The controller 26 may detect the presence or absence of the first flag 66a corresponding to the first transistor *MN1* transitioning from its off-state to its on-state. In an alternative example, the controller 26 may detect the presence or absence of the first flag 66a using a first acceptance band, or any other method. The first acceptance band may be a first predetermined phase-angle band (for example, 10°). The activation phase-angle 28A may be a limit of the first acceptance band. For example, if the activation phase-angle 28A is 80°, then the first acceptance band may be between 70° and 80°. Alternatively, the first acceptance band may be the activation phase-angle 28A ±*x*°, where x may be 5, 10, 15, 20, or 30 etc.

If the controller 26 determines that a first voltage transient 65a is detected (optionally, within the first acceptance band) which corresponds to the switching of the first transistor *MN1* from its off-state to its on-state, then the process continues to step S16. If the controller 26 determines that a first voltage transient 65a is not detected (optionally, within the first acceptance band) which corresponds to the switching of the first transistor *MN1* from its off-state to its on-state, then the process continues to step S17.

At step S16, the controller 26 is configured to adjust the activation phase-angle 28A (e.g., via the activation threshold voltage Vt_on). Specifically, the controller 26 may be configured to decrease the activation phase-angle 28A (e.g., via the activation threshold voltage Vt_on), in response to sensing the first voltage transient 65a. The controller 26 may decrease the activation threshold voltage Vt_on by a fixed voltage level. The fixed voltage level may be equivalent to at least 1 Least Significant Bit (LSB) of a Digital to Analog Converter (DAC). The DAC may be an internal component of the controller 26. In some examples, the adjustment to the activation phase-angle 28A (e.g., via the activation threshold voltage Vt_on), and/or the deactivation phase-angle 28B (e.g., via the deactivation threshold voltage Vt_off), may be based on the length (e.g., the length of time between the rising and falling edge) of the first or second flag 66a, 66b. For example, the activation threshold voltage Vt_on may be decreased by a voltage proportional to the length of time between the rising and falling edge of the first flag 66a of the first signal 66.

At step S17, the controller 26 is configured to adjust the activation phase-angle 28A (e.g., via the activation threshold voltage Vt_on). Specifically, the controller 26 may be configured to increase the activation phase-angle 28A (e.g., via the activation threshold voltage Vt_on) in response to sensing the first voltage transient 65a. The controller 26 may increase the activation threshold voltage Vt_on by the fixed voltage level (e.g., by 1 LSB of a DAC).

At step S18, the first block 41 compares the voltage at the first node D1 to the control voltage threshold (*-Vₜₕ*)*.* The first block 41 generates the first signal 66 which may or may not comprise the second flag 66b *[VT_NEG_RIS].* In addition, the first transistor *MN1* is switched to from its on-state to its off-state.

At decision step S19, the controller 26 determines if a second voltage transient 65a is detected corresponding to switching the first transistor *MN1* from its on-state to its off-state. For example, the first transient detection comparator 41a generates the first signal 66 comprising the second flag 66b [*VT_NEG_RIS]*)*,* and the controller 26 detects the presence or absence of the second flag 66b in the first signal 66. The controller 26 may detect the presence or absence of the second flag 66b corresponding to the first transistor *MN1* transitioning from its on-state to its off-state. Alternatively, the controller 26 may detect the presence or absence of the second flag 66b using a second acceptance band, or any other method. The second acceptance band may be a second predetermined phase-angle band (which may be equal or different to the first predetermined phase-angle band for example, 10°). The deactivation phase-angle 28B may be a limit of the second acceptance band. For example, if the deactivation phase-angle 28b is 95°, then the second acceptance band may be between 95° and 105°. Alternatively, the second acceptance band may be the deactivation phase-angle 28B ±*y*°, where y may be *x,* 5, 10, 15, 20, or 30 etc.

If the controller 26 determines that a second voltage transient 65b is detected (optionally, within the second acceptance band) which corresponds to the switching of the first transistor *MN1* from its on-state to its off-state, then the process continues to step S20. If the controller 26 determines that a second voltage transient 65b is not detected (optionally, within the second acceptance band) which corresponds to the switching of the first transistor *MN1* from its on-state to its off-state, then the process continues to step S21.

At step S20, the controller 26 is configured to adjust the deactivation phase-angle 28B (e.g., via the deactivation threshold voltage Vt_off). Specifically, the controller 26 may be configured to increase the deactivation phase-angle 28B (e.g., via the deactivation threshold voltage Vt_off), in response to sensing the second voltage transient 65b. The controller 26 may increase the deactivation threshold voltage by the fixed voltage level (e.g., by 1 LSB of a DAC).

At step S21, the controller 26 is configured to adjust the deactivation phase-angle 28B (e.g., via the deactivation threshold voltage Vt_off). Specifically, the controller 26 may be configured to decrease the deactivation phase-angle 28B (e.g., via the deactivation threshold voltage Vt_off), in response to sensing the second voltage transient 65b. The controller 26 may decrease the deactivation threshold voltage by the fixed voltage level (e.g., by 1 LSB of a DAC).

At optional step S22, the controller 26 may wait for a new half cycle of the AC voltage input signal *V_{AC_IN}.*

As it can be seen in Figure 14, the adjustment algorithm 70 repeats. This adjustment algorithm 70 ensures precise control, in response to sensing the voltage transient, of a phase-angle at which the first transistor *MN1* switches between an on-state and an off-state, for maintaining system stability and optimising performance within defined operational thresholds. The adjustment algorithm 70 is shown with respect to the first ramp signal 30. However, the adjustment algorithm 70 may also be used to independently control the rate of change of the second ramp signal 31 in a similar way.

The adjustment algorithm 70 described above, in response to sensing (or not sensing) the first voltage transient 65a and/or the second voltage transient 65b, controls the activation phase-angle 28A and deactivation phase-angle 28B at which the first transistor *MN1* switches between an on-state and an off-state. The adjustment algorithm 70 may similarly be configured to, in response to sensing (or not sensing) the third voltage transient 65c and/or the fourth voltage transient 65d, controls the second activation phase-angle and second deactivation phase-angle at which the second transistor *MN2* switches between an on-state and an off-state.

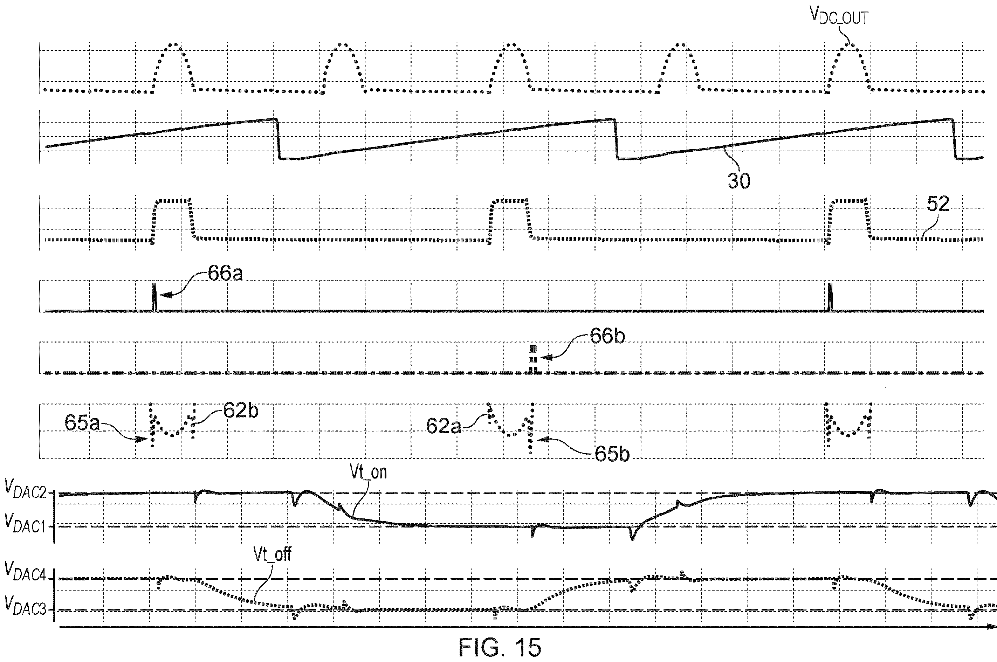

Figure 15 shows multiple signals corresponding to the switching of the first transistor *MN1* (which are described previously) with a common time scale in response to three cycles of the AC voltage input signal *V_{AC_IN},* It is shown that in response to sensing the first voltage transient 65a, the activation threshold voltage Vt_on is decreased from *V*_{*DAC*2} to *V*_{*DAC*1}. It is shown that in response to sensing the absence of a voltage transient which corresponds to the switching of the first transistor *MN1* from its off-state to its on-state, the activation threshold voltage Vt_on is increased from *V*_{*DAC*1} to *V*_{*DAC*2}*.* It is shown that in response to sensing the second voltage transient 65b, the deactivation threshold voltage Vt_off is increased from *V*_{*DAC*3} to *V*_{*DAC*4}. It is shown that in response to sensing the absence of a voltage transient which corresponds to the switching of the first transistor *MN1* from its on-state to its off-state, the deactivation threshold voltage Vt_off is decreased from *V*_{*DAC*4} to *V*_{*DAC*3}. Where *V*_{*DAC*1},*V*_{*DAC*2},*V*_{*DAC*3}, and *V*_{*DAC*4} represent four possible output voltages of the DAC.

Although, signals corresponding to the switching of the first transistor *MN1* are described with reference to Figure 15, it will be appreciated that the full-wave active rectifier system 20, 40 also generates signals corresponding to the switching of the second transistor *MN2* in a similar way.

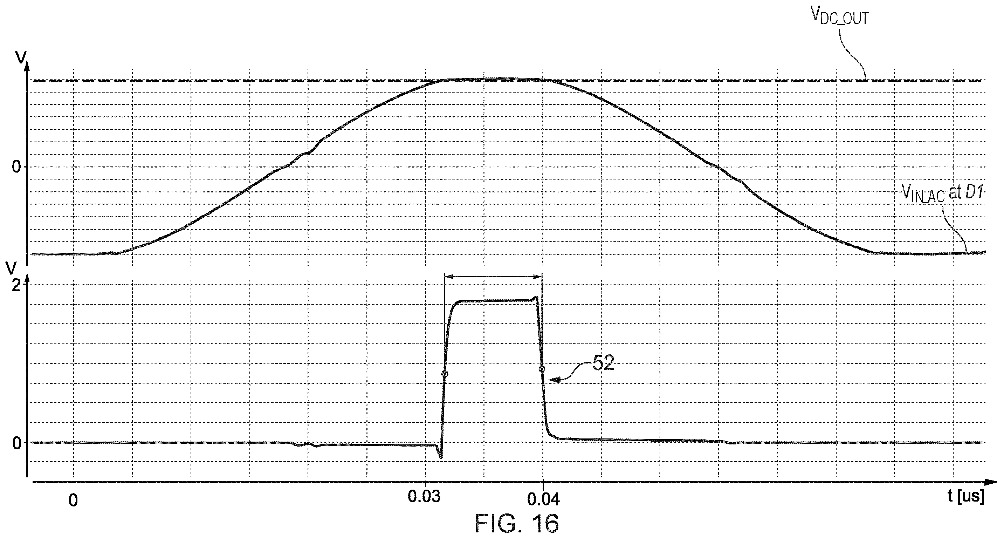

Figure 16 shows a graph of the DC voltage output signal *VDC_OUT* generated from the AC voltage input signal *V_{AC_IN},* in accordance with the full-wave active rectifier system 20, 40 of the invention. Figure 16 also shows the first control signal 52 for the first transistor *MN1.* Figure 16 shows that at a frequency of the AC voltage input signal *V_{AC_IN}* of 13.6MHz, and at an AC voltage input magnitude equal to 14V, in a typical BCD process, a conversion efficiency of 93.1% is achieved.

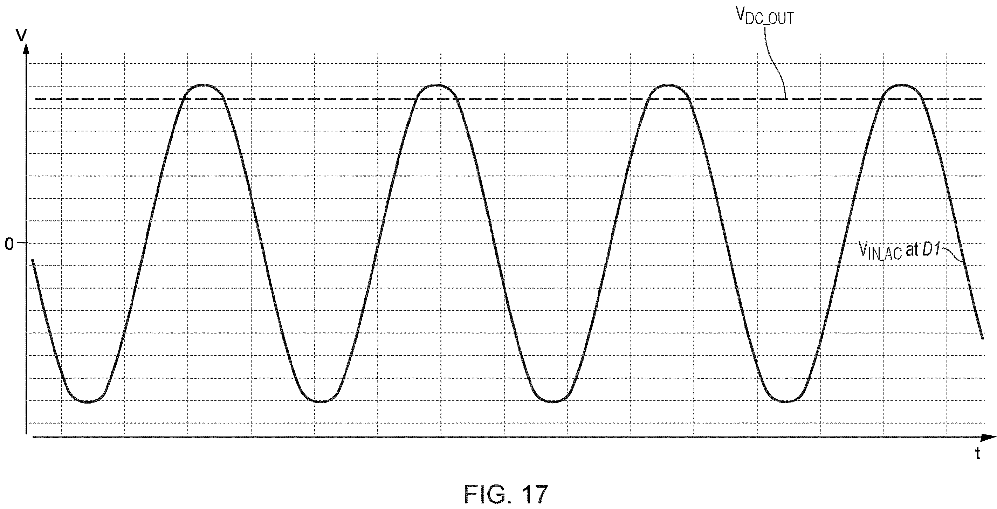

In comparison, Figure 17 shows a graph of the DC voltage output signal *VDC_OUT* generated from the AC voltage input signal *V_{AC_IN},* in accordance with a Schottky diode rectifier. Figure 17 shows that at a frequency of the AC voltage input signal *V_{AC_IN}* of 13.6MHz, and at an AC voltage input magnitude equal to 14V, in the same BCD process as above, the Schottky diode rectifier achieves a conversion efficiency of 88.8%.

Thus, the full-wave active rectifier system 20, 40 of the invention improves efficiency via control of the first and second transistors *MN1,MN2.*

Each transistor *MN*1, *MN*2, *MP*2, *MP*1 comprises a respective control terminal *GN*1,*GN*2,*GP*2*,GP*1, and first and second channel terminals (i.e., current carrying part). Each transistor *MN1,MN2,MP2,MP1* may be a FET or more specifically a MOSFET. Where each transistor *MN*1,*MN*2,*MP*2,*MP*1 is a MOSFET, the respective control terminal *GN*1,*GN*2,*GP*1,*GP*2 is a gate terminal, the respective first channel terminal is a drain terminal, and the respective second channel terminal is a source terminal.

Each block of Figure 2 and Figure 6 is shown and defined for explanatory purposes only, it would be well understood that the algorithm or function which each block represents may be implemented in a plurality of other ways so long as the functionality as described is present. For example, the blocks of Figure 2 and/or 6 may be combined and implemented as part of a circuit arrangement, on a single integrated circuit, processor, or computer, or implemented by a plurality of circuit arrangements, integrated circuits, processors, and/or computers.

Although the examples herein describe a ramp signal 30, in alternative examples, any varying signal may be used. The varying signal may be a *'*one-to-one function' and tracks the frequency of the AC voltage input signal. The varying signal may be a varying voltage signal. For example, the varying signal may be generated by a charging capacitor, this would result in a non-linear voltage signal. The varying signal is shown in examples herein to be increasing, but in alternative examples the varying signal may be decreasing.

In the control voltage threshold is between ground level (GND) and -Vt, where Vt is the cut-in voltage of the body diode of the first transistor *MN1* and/or second transistor *MN2.* Preferably control voltage threshold is between GND and -Vt/2, and more preferably approximately 70mV.

In examples such as Figures 2, 6, and 10, the first node D1 is electrically coupled to the control terminal *GP2* of the third transistor *MP2,* and the second node D2 is electrically coupled to the control terminal *GP*1 of the fourth transistor *MP1.* In alternative examples the control terminals of the third transistor *MP2* and fourth transistor *MP1,* i.e. GP2/GP1, may be generated by the voltages on the first and second nodes D1,D2 via one or more voltage limiting circuits. Advantageously, the VGS/VSG rating of the third and fourth transistor may be a low voltage (e.g., 2V) but the rectifier may be designed to operate (e.g. 14V), so voltage limiting circuits may generate the control terminal voltages GP1/GP2 from D1/D2 such that the voltage differences (VDC_OUT-VGP1) and (VDC_OUT-VGP2) do not exceed the low voltage (e.g., 2V).

An operating mode with a control loop (i.e., an industrial control loop, or closed loop control) for controlling an active transistor of a full-wave active rectifier, in accordance with this disclosure, includes a controller for receiving an input signal representative of an offset between a generated phase angle of the active transistor's control signal (e.g., at time t=-1) and an ideal phase angle of the active transistor's control signal, and for generating an output signal based on the input signal and corresponding to the generated phase angle of the active transistor's control signal (e.g., at time t=0). The active transistor is configured to receiving the output signal at its control terminal. The controller may adjust the process in response to the output signal. The controller uses the control algorithm to generate the output signal for the current iteration of the loop (e.g., at time t=0). The controllable device adjusts the process in order to bring the output signal towards the ideal phase angle of the active transistor's control signal represented by not detecting a voltage transient at a channel terminal of the active transistor, which will be used as the input for the next iteration of the loop (e.g., at time t=1). The controller may be implemented as a computer program executing on a processor, and the active transistor may be connected to the controller via electrical or communication links.

A symmetrical AC signal is a signal with half-wave symmetry and consists of identical half-cycles with opposite polarities. Due to this alternating feature, the average value of the signal is zero.

Unless the context clearly requires otherwise, throughout the description and the claims, the words "comprise," "comprising," "include," "including," and the like are to be construed in an inclusive sense, as opposed to an exclusive or exhaustive sense; that is to say, in the sense of "including, but not limited to."

The words "coupled" or "connected", as generally used herein, refer to two or more elements that may be either directly connected, or connected by way of one or more intermediate elements. Additionally, the words "herein," "above," "below," and words of similar import, when used in this application, shall refer to this application as a whole and not to any particular portions of this application. Where the context permits, words in the Detailed Description using the singular or plural number may also include the plural or singular number, respectively. The words "or" in reference to a list of two or more items, is intended to cover all of the following interpretations of the word: any of the items in the list, all of the items in the list, and any combination of the items in the list.

It is to be understood that one or more features from one or more of the above- described embodiments may be combined with one or more features of one or more other ones of the above-described embodiments, so as to form further embodiments which are within the scope of the appended claims.

### NUMBERED CLAUSES

By way of non-limiting example, some aspects of the disclosure are set out in the following numbered clauses.
Clause 1 - A full-wave active rectifier system, comprising:
   a full-wave active rectifier for generating a DC voltage output signal based on an AC voltage input signal comprising: first and second transistors which are controllable by a controller; and, third and fourth transistors which are controlled by the AC voltage input signal; and
   the controller coupled to the first transistor;
   wherein the full-wave active rectifier system is configured to:
      i. when the first transistor is in an off-state, monitor a first voltage at a first node shared by the AC voltage input signal and a first terminal of the first transistor; and
      ii. sense a voltage transient in the first voltage caused by switching the first transistor between an on-state and the off-state;
   wherein the controller is configured to:
      control, in response to sensing the voltage transient, a phase-angle at which the first transistor switches between the on-state and the off-state.
Clause 2 - The system of numbered clause 1, wherein the phase-angle is an activation phase-angle, the activation phase-angle is controlled to anticipate the switching of the first transistor from the off-state to the on-state in response to sensing the voltage transient [(VT_NEG_FAL=1)],
Clause 3 - The system of any of numbered clauses 1 or 2, [wherein the phase-angle is an activation phase-angle], wherein the activation phase-angle is controlled to delay the switching of the first transistor from the off-state to the on-state in response to not sensing the voltage transient [(VT_NEG_FAL=0)] within a period of the AC voltage input signal.
Clause 4 - The system of any of numbered clauses 1 to 3, [wherein the phase-angle is a deactivation phase-angle, or the system further comprises a deactivation phase-angle], wherein the deactivation phase-angle is controlled to delay the switching of the first transistor from the on-state to the off-state in response to sensing the voltage transient [(VT_NEG_RIS=1)].
Clause 5 - The system of any of numbered clauses 1 to 4, [wherein the phase-angle is a deactivation phase-angle, or the system further comprises a deactivation phase-angle], wherein the deactivation phase-angle is controlled to anticipate the switching of the first transistor from the on-state to the off-state in response to not sensing the voltage transient [(VT_NEG_RIS=0)] within a period of the AC voltage input signal.
Clause 6 - The system of any preceding numbered clause, wherein the controller is further configured to generate a varying voltage signal [optionally the varying voltage signal is a ramp] based on the frequency of the AC voltage input signal, wherein the phase-angle is determined based on the varying voltage signal reaching a first threshold.
Clause 7 - The system of numbered clause 6, when dependent on numbered clause 4 or 5, wherein the deactivation phase-angle is determined based on the varying voltage signal reaching a second threshold.
Clause 8 - The system of numbered clause 7, wherein the second threshold is greater than the first threshold.
Clause 9 - The system of any of numbered clauses 6 to 8, wherein the varying voltage signal is generated upon determining that one of the third or fourth transistors is switched between an off-state and an on-state.
Clause 10 - The system of any of numbered clauses 6 to 9, wherein the [first and/or second] varying voltage signal is a 'one-to-one function' and tracks the frequency of the AC voltage input signal.
Clause 11 - The system of any of numbered clauses 6 to 10, wherein the controller is configured to: reset the [first and/or second] varying voltage signal when the third transistor or fourth transistor is switched between an off-state and an on-state.
Clause 12 - The system of any of numbered clauses 6 to 11, wherein the controller is configured to operate a frequency tracking algorithm configured to: determine a peak value of the varying voltage signal, wherein the varying voltage signal has a corresponding rate of change; and increase the rate of change of the varying voltage signal if the peak fails to exceed a lower threshold; or decrease the rate of change of the subsequent varying voltage signal if the peak exceeds an upper threshold.
Clause 13 - The system of numbered clause 12, wherein the varying voltage signal is reset after the varying voltage signal reaches its peak value.
Clause 14 - The system of any of numbered clauses 12 or 13, wherein the frequency tracking algorithm is further configured to: maintain the rate of change of the subsequent varying voltage signal if the peak exceeds the lower threshold and fails to exceed the upper threshold.
Clause 15 - The system of any of numbered clauses 6 to 14, wherein the varying voltage signal is a ramp signal.
Clause 16 - The system of any of preceding numbered clause, when dependent on clause 7, wherein the controller is further configured to set the first threshold equal to the second threshold upon start-up of the full-wave active rectifier.
Clause 17 - The system of any of preceding numbered clause, wherein the first terminal of the first transistor is the drain of the first transistor.
Clause 18 - The system of any of preceding numbered clause, wherein a first terminal of the second transistor is the drain of the second transistor.
Clause 19 - The system of any of preceding numbered clause, wherein the voltage transient is sensed by comparing the first voltage to a control voltage threshold, wherein the control voltage threshold is between ground level (GND) and -Vt, where Vt is the cut-in voltage of the body diode of the first transistor, and preferably between GND and -Vt/2.
Clause 20 - The system of any of preceding numbered clause, wherein each transistor comprising a control terminal, and first and second channel terminals (i.e., current carrying part), wherein the full-wave active rectifier comprises: a first AC voltage input node coupled to a first channel terminal (drain) of the fourth transistor, a first channel terminal (e.g., drain) of the first transistor, and a control terminal of the third transistor; a second AC voltage input node coupled to a first channel terminal (e.g., drain) of the third transistor, a first channel terminal (e.g., drain) of the second transistor, and a control terminal of the fourth transistor; a voltage output node coupled to a second channel terminal (e.g., source) of the third transistor and a second channel terminal (e.g., source) of the fourth transistor; and a ground node coupled to a second channel terminal (e.g., source) of the first transistor and a second channel terminal (e.g., source) of the second transistor.
Clause 21 - The system of any of numbered clauses 19 or 20, wherein the full-wave active rectifier system comprises: a transient detection comparator comprising an input coupled to the first AC voltage input node and configured to compare the first voltage to the control voltage threshold, wherein the first voltage is the voltage at the first AC voltage input node. Clause 22 - The system of numbered clauses 21, wherein the transient detection comparator is configured to be: deactivated when the first transistor is in the on-state (B2); activated when the first transistor is in the off-state (B3).
Clause 23 - The system of any of numbered clauses 21 or 22, wherein the transient detection comparator generates a flag signal indicating that the first voltage exceeds the control voltage threshold, wherein the controller is configured to control the phase-angle based on the flag signal and the determination that the first transistor is switched between the on-state and the off-state.
Clause 24 - The system of any of numbered clauses 21 to 23, wherein the transient detection comparator is a first transient detection comparator, and wherein the full-wave active rectifier arrangement comprises: a second transient detection comparator comprising an input coupled to the second AC voltage input node and configured to compare a second voltage to the control voltage threshold, wherein the second voltage is the voltage at the second AC voltage input node.
Clause 25 - The system of numbered clauses 24, wherein the second transient detection comparator is configured to be: deactivated when the second transistor is an on-state (A2); activated when the second transistor is an off-state (A3).
Clause 26 - The system of any of numbered clauses 6-25, wherein the controller is configured to: adjust the first threshold in response to sensing the voltage transient; and/or when dependent on numbered clause 7, adjust the second threshold in response to sensing the voltage transient.
Clause 27 - The system of numbered clauses 26, wherein the first threshold is reduced in response to sensing the voltage transient.
Clause 28 - The system of any of numbered clauses 26 or 27, wherein the second threshold is increased in response to sensing the voltage transient.
Clause 29 - The system of any of numbered clauses 26-28, wherein the first and/or second thresholds are adjusted by a fixed voltage level.
Clause 30 - The system of any of numbered clauses 6-29, wherein the full-wave active rectifier system comprises: a Digital to Analog Converter, DAC, configured to generate the first threshold, wherein the first threshold is adjusted by a voltage level equivalent to 1 Least Significant Bit, LSB, of the DAC, and/or when dependent on numbered clause 7, the DAC is configured to generate the second threshold, wherein the second threshold is adjusted by a voltage level equivalent to 1 Least Significant Bit, LSB, of the DAC.
Clause 31 - The system of any of any preceding numbered clause, wherein the operating frequency of the AC voltage input signal is between 5 and 20 MHz.
Clause 32 - The system of any of any preceding numbered clause, wherein each transistor is a FET, and optionally is a MOSFET.
   It will be appreciated that the subject matter of at least any of Clause 1 to 32 relate to features for the control of the first transistor. However, in other aspects of the disclosure, the features recited in clauses 1 to 32 may relate to features for the control of the second transistor of the full-wave active rectifier system. The use of the terms 'first', 'second', 'third', 'fourth', etc. herein are used as labels for purposes of identification. The control of the second transistor may correspond with the control of the first transistor or it may differ based on at least the examples set out herein relating to control of the first transistor. The following numbered clauses are some aspects of the disclosure which correspond to at least the control of the second transistor.
Clause 33 - The system of any preceding numbered clause, the full-wave active rectifier system further configured to:
   i. when the second transistor is in an off-state, monitor a second voltage at a second node shared by the AC voltage input signal and a first terminal of the second transistor;
   ii. sense a second voltage transient in the second voltage caused by switching the second transistor between an on-state and the off-state; and
   wherein the controller is configured to:
   control, in response to sensing the second voltage transient, a second phase-angle at which the second transistor switches between an on-state and an off-state.
Clause 34 - The system of numbered clause 33, wherein the second phase-angle is a second activation phase-angle, the second activation phase-angle is controlled to anticipate the switching of the second transistor from the off-state to the on-state in response to sensing the second voltage transient [(VT_NEG_FAL=1)].
Clause 35 - The system of any of numbered clauses 33 or 34, [wherein the second phase-angle is a second activation phase-angle], wherein the second activation phase-angle is controlled to delay the switching of the second transistor from the off-state to the on-state in response to not sensing the second voltage transient [(VT_NEG_FAL=0)] within a period of the AC voltage input signal.
Clause 36 - The system of any of numbered clauses 33 to 35, [wherein the second phase-angle is a second deactivation phase-angle, or the system further comprises a second deactivation phase-angle], wherein the second deactivation phase-angle is controlled to delay the switching of the second transistor from the on-state to the off-state in response to sensing the second voltage transient [(VT_NEG_RIS=1)].
Clause 37 - The system of any of numbered clauses 33 to 36, [wherein the second phase-angle is a second deactivation phase-angle, or the system further comprises a second deactivation phase-angle], wherein the second deactivation phase-angle is controlled to anticipate the switching of the second transistor from the on-state to the off-state in response to not sensing the second voltage transient [(VT_NEG_RIS=0)] within a period of the AC voltage input signal.
Clause 38 - The system of any of numbered clauses 33 to 37, wherein the varying voltage signal is a first varying voltage signal, wherein the full-wave active rectifier system is further configured to generate a second varying voltage signal [optionally the second varying voltage signal is a second ramp] based on the frequency of the AC voltage input signal, wherein the second phase-angle of the second transistor is determined based on the second varying voltage signal reaching a third threshold.
Clause 39 - The system of any of numbered clauses 33 to 38, when dependent on numbered clause 36 or 37, wherein the second deactivation phase of the second transistor is determined based on the second varying voltage signal reaching a fourth threshold, optionally the fourth threshold is greater than the third threshold.
Clause 40 - The system of any of numbered clauses 33 to 39, wherein the varying voltage signal is a first varying voltage signal, and wherein the controller is configured to: reset the varying voltage signal when the fourth transistor is switched between an off-state and an on-state, and, when dependent on numbered clause 38, reset the second varying voltage signal when the third transistor is switched between an off-state and an on-state.

## Claims

1. A full-wave active rectifier system, comprising:
a full-wave active rectifier for generating a DC voltage output signal based on an AC voltage input signal, the full-wave active rectifier comprising: a controller; first and
second transistors which are controllable by the controller; and, third and fourth transistors which are controlled by the AC voltage input signal; wherein the full-wave active rectifier system is configured to:
i. when the first transistor is in an off-state, monitor a first voltage at an AC input node shared by the AC voltage input signal and a first terminal of the first transistor; and
ii. sense a voltage transient in the first voltage caused by switching the first transistor between an on-state and the off-state,
wherein the controller is configured to:
control, in response to sensing the voltage transient, a phase-angle at which the first transistor switches between the on-state and the off-state.

2. The system of claim 1, wherein the phase-angle is an activation phase-angle, the activation phase-angle is controlled to anticipate the switching of the first transistor from the off-state to the on-state in response to sensing the voltage transient.

3. The system of any of claims 1 or 2, wherein the phase-angle is an activation phase-angle, the activation phase-angle is controlled to delay the switching of the first transistor from the off-state to the on-state in response to not sensing the voltage transient within a period of the AC voltage input signal.

4. The system of any preceding claim, wherein the phase-angle is a deactivation phase-angle, the deactivation phase-angle is controlled to:
delay the switching of the first transistor from the on-state to the off-state in response to sensing the voltage transient; and/or,
anticipate the switching of the first transistor from the on-state to the off-state in response to not sensing the voltage transient within a period of the AC voltage input signal.

5. The system of any preceding claim, wherein the controller is further configured to generate a varying voltage signal based on a frequency of the AC voltage input signal, wherein the phase-angle is determined based on the varying voltage signal reaching a first threshold.

6. The system of claim 5, wherein the phase-angle is an activation phase-angle, wherein the controller is further configured to switch the first transistor from the off-state to the on-state based on the activation phase-angle, wherein the controller is further configured to switch the first transistor from the on-state to the off-state based on a deactivation phase-angle, wherein the deactivation phase-angle is determined based on the varying voltage signal reaching a second threshold.

7. The system of claim 6, wherein the controller is configured to:
adjust the first threshold in response to sensing the voltage transient; and/or,
adjust the second threshold in response to sensing the voltage transient; and/or,
set the first threshold equal to the second threshold upon start-up of the full-wave active rectifier.

8. The system of any preceding claim, wherein the controller is configured to operate a frequency tracking algorithm configured to:
determine a peak value of a varying voltage signal, wherein the varying voltage signal has a corresponding rate of change; and
increase the rate of change of the varying voltage signal if the peak fails to exceed a lower threshold; or decrease the rate of change of a subsequent varying voltage signal if the peak exceeds an upper threshold.

9. The system of any preceding claim, wherein the voltage transient is sensed by comparing the first voltage to a control voltage threshold, wherein the control voltage threshold is between ground level, GND, and -Vt, where Vt is a cut-in voltage of a body diode of the first transistor, and preferably between GND and -Vt/2.

10. The system of claim 9, wherein the full-wave active rectifier system comprises a transient detection comparator comprising an input coupled to the AC input node and configured to compare the first voltage to the control voltage threshold, and optionally, the transient detection comparator is configured to be:
deactivated when the first transistor is in the on-state; and
activated when the first transistor is in the off-state.

11. The system of claim 10, wherein the transient detection comparator generates a flag signal indicating that the first voltage exceeds the control voltage threshold, and wherein the controller is configured to control the phase-angle based on the flag signal and determine that the first transistor is switched between the on-state and the off-state.

12. The system of any of claims 10 or 11, wherein the transient detection comparator is a first transient detection comparator, wherein the AC input node is a first AC input node, and wherein a full-wave active rectifier arrangement comprises a second transient detection comparator comprising an input coupled to a second AC input node shared by the AC voltage input signal and a first terminal of the second transistor and the second transient detection comparator is configured to compare the control voltage threshold to the voltage at the second AC input node, and optionally,
the second transient detection comparator is configured to be:
deactivated when the second transistor is in an on-state; and
activated when the second transistor is in an off-state.

13. The system of any preceding claim, wherein the AC input node is a first AC input node, wherein the full-wave active rectifier system further configured to:
iii. when the second transistor is in an off-state, monitor a second voltage at a second AC input node shared by the AC voltage input signal and a first terminal of the second transistor; and
iv. sense a second voltage transient in the second voltage caused by switching the first transistor between an on-state and the off-state; and
wherein the controller is further configured to:
control, in response to sensing the second voltage transient, a second phase-angle at which the second transistor switches between the on-state and the off-state.

14. The system of claim 13, wherein the second phase-angle is a:
second activation phase-angle, the second activation phase-angle is controlled to anticipate the switching of the second transistor from the off-state to the on-state in response to sensing the second voltage transient; and/or,
a second deactivation phase-angle, the second deactivation phase-angle is controlled to delay the switching of the second transistor from the on-state to the off-state in response to sensing the second voltage transient.

15. The system of any of claims 13 or 14, wherein a varying voltage signal is a first varying voltage signal, wherein the full-wave active rectifier system is further configured to generate a second varying voltage signal based on a frequency of the AC voltage input signal, wherein the second phase-angle is determined based on the second varying voltage signal reaching a third threshold.
